# EUROPÄISCHE PATENTANMELDUNG

(11) **EP 4 841 532 A1**
(43) Veröffentlichungstag der Anmeldung: **18.11.2026**
(21) Anmeldenummer: 25176268.8
(22) Anmeldetag: 14.05.2025
(51) Int. Cl.: G06Q 10/04, G06Q 50/06, G06Q 30/0201, H02J 3/00

(54) **REGELUNG VON LASTEN IN EINEM ENERGIESYSTEM**

(71) Anmelder: Siemens Aktiengesellschaft, 80333 München (DE)
(72) Erfinder: Bamberger, Joachim, 82131 Stockdorf (DE); Baumgärtner, Thomas, 91056 Erlangen (DE); Kalysh, Ileskhan, 91058 Erlangen (DE); Metzger, Michael, 85570 Markt Schwaben (DE); Sahlender, Sebastian, 85435 Erding (DE); Schreck, Sebastian, 90429 Nürnberg (DE); Schütz, Thomas, 90765 Fürth (DE); Thiem, Sebastian, 91413 Neustadt an der Aisch (DE)
(74) Vertreter: Siemens Patent Attorneys

(57) **Zusammenfassung**

Es wird ein computergestütztes Verfahren zum Regeln einer Anzahl von regelbaren Lasten (L) in einem Energiesystem (1) angegeben, welches innerhalb eines Energieverteilnetzes mit Energie versorgt wird. Das Verfahren umfasst die folgenden Schritte:
a) Ermitteln eines optimierten ersten Betriebsszenarios (S_{A}) für ein zukünftiges Zeitfenster (T₁),
- wobei anhand eines computerimplementierten Modells des Energiesystems (1) eine Optimierung der zugeordneten Lastprofile im Hinblick auf von einem Betreiber (OP) des Energiesystems (1) zu zahlende Netzentgelte (Eₙ) erfolgt, unter der Randbedingung, dass eine vordefinierte Aufgabe mittels der Lasten (L) des Energiesystems (1) umgesetzt wird,

b) Empfangen einer Preisprognose (FC(P)) für den zeitlichen Verlauf eines Energiepreises (P_{E}),
c) Erstellen wenigstens eines optimierten zweiten Betriebsszenarios (S_{B1},S_{B2}) für das zukünftige Zeitfenster (T₁),
- wobei anhand eines computerimplementierten Modells des Energiesystems eine Optimierung der zugeordneten Lastprofile im Hinblick auf eine übergeordnete Zielfunktion erfolgt, welche zumindest die zu zahlenden Energiekosten (Eₙ) berücksichtigt sowie einen auf dem kurzfristigen Energiemarkt (7) erzielbaren Ertrag (E_{f}) für die Festlegung auf den zeitlichen Verlauf des zugeordneten Gesamtenergiebedarfs (E(S_{B1}),E(S_{B2})),

d) automatisiertes Ableiten wenigstens eines Angebots (O_{B1},O_{B2}) für eine verbindliche Festlegung auf den zeitlichen Verlauf des Gesamtenergiebedarfs entsprechend dem wenigstens einen zweiten Betriebsszenario,
e) automatisiertes Platzieren des wenigstens einen abgeleiteten Angebots (O_{B1},O_{B2}) gegenüber einem potenziellen Vertragspartner (6), insbesondere einem Handelspartner des kurzfristigen Energiemarkts (7), und
f) automatisiertes Umsetzen eines der optimierten Betriebsszenarien (S_{A}, S_{B1}) durch Regeln der Lasten (L) entsprechend den zugeordneten Lastprofilen,
- wobei ohne Annahme eines der platzierten Angebote die Umsetzung des ersten Betriebsszenarios (S_{A}) erfolgt und
- wobei bei Annahme eines der platzierten Angebote (O_{B1}) die Umsetzung des zugeordneten zweiten Betriebsszenarios (S_{B1}) erfolgt.

Weiterhin werden ein System sowie ein Computerprogrammprodukt angegeben.

## Beschreibung

Die vorliegende Erfindung betrifft ein computergestütztes Verfahren zum Regeln einer Anzahl von regelbaren Lasten in einem Energiesystem, welches innerhalb eines Energieverteilnetzes mit Energie versorgt wird. Weiterhin betrifft die Erfindung ein System sowie ein Computerprogrammprodukt zum Regeln derartiger Lasten.

Sowohl der Aufbau als auch der Betrieb moderner Energieverteilnetze wird zunehmend komplexer, da z.B. im Rahmen der Energiewende vor allem auf der Ebene lokaler elektrischer Verteilnetze mehr und mehr dezentrale Stromerzeuger wie Photovoltaik-Anlagen und Windkraft-Anlagen hinzutreten, welche im Gegensatz zu herkömmlichen Kraftwerken in ihrer Einspeiseleistung stärker schwanken und schwerer planbar sind. Neben diesen dezentralen Erzeugern kommen auch immer mehr dezentrale elektrische Speicher hinzu, und auch die Netzlast durch elektrische Verbraucher erhöht sich durch den Zuwachs an elektrisch betriebenen Wärmepumpen, an Elektrofahrzeugen und ähnlichem. Beim Betrieb eines solchen elektrischen Energieverteilnetzes ist es eine wesentliche Herausforderung, die Netzstabilität zu gewährleisten. Dies beinhaltet die Sicherstellung eines Gleichgewichts (einer hinreichenden Übereinstimmung) zwischen Stromerzeugung und Stromverbrauch, also mit anderen Worten zwischen der im Netz bereitgestellten und der aufgenommenen elektrischen Leistung. Hierdurch kann die Einhaltung vorgegebener Spannungsbänder und Frequenzbänder sichergestellt werden. Ähnliche Herausforderungen ergeben sich beim Betrieb anderer Arten von Energieverteilnetzen bei der ständigen Balancierung von bereitgestellter und genutzter Energie.

Verantwortlich für die Maßnahmen zur Sicherung der Netzstabilität in elektrischen Energienetzen sind typischerweise die sogenannten Übertragungsnetzbetreiber auf der Ebene der Höchstspannungs-Übertragungsnetze sowie die Verteilnetzbetreiber auf der Ebene der Mittelspannungs- und Niederspannungsnetze. Die dabei eingesetzten Maßnahmen umfassen die Kompensation von Frequenzabweichungen durch Regelleistung (insbesondere durch Einsatz von Primärregelreserve, Sekundärregelreserve und Minutenreserve), Redispatch-Maßnahmen zur Behebung von Engpässen im Netz, Maßnahmen zur Spannungshaltung und allgemein zum Lastmanagement. Beim Lastmanagement (auch: Demand Side Management) wird die Leistungsaufnahme elektrischer Lasten flexibel an die aktuelle Netzsituation angepasst, zum Teil auch durch automatisierte Steuerungen, die die Leistungsaufnahme in Abhängigkeit von tatsächlichen Preissignalen in Echtzeit anpassen können. Die Betreiber solcher regelbaren Lasten können als Anbieter von sogenannter Regelleistung auftreten und werden auf sogenannten Flexibilitätsmärkten (auch: Regelenergiemärkten) für die Bereitstellung dieser Flexibilität vergütet.

Als Anbieter solcher Flexibilitäten treten derzeit typischerweise Gewerbe- und Industrieunternehmen mit großen steuerbaren Anlagen, Stadtwerke mit steuerbaren dezentralen Erzeugern sowie sogenannte Aggregatoren auf. Aggregatoren sind Unternehmer oder Dienstleister, die viele kleine, flexible Stromquellen oder -verbraucher technisch und wirtschaftlich zusammenfassen und mit deren Aktionen als gebündelte Einheit an einem kurzfristigen Energiemarkt handeln können. Die Aggregatoren können eine zentrale Steuerung von mehreren Lasten und Erzeugern als Reaktion auf Echtzeit-Preissignale durchführen.

Trotz dieser bekannten Mechanismen besteht weiterhin ein Bedarf für die Nutzung zusätzlicher zeitlicher Flexibilitäten in der Leistungsaufnahme elektrischer Verbraucher, um einerseits die Netzstabilität garantieren zu können und andererseits das Energieverteilnetz als Ganzes effizient betreiben zu können. Ein Mangel an zeitlicher Flexibilität von nutzbaren elektrischen Lasten kann insgesamt zu einer verringerten Effizienz beim übergeordneten Betrieb des Energienetzes führen. So kann ein Fehlen von ausreichenden zeitlich verschiebbaren Lasten zum Beispiel dazu führen, dass erneuerbare Energiequellen unnötig abgeschaltet werden, dass konventionelle Kraftwerke unnötig hoch- bzw. runtergefahren werden und/oder dass elektrische Energie sogar ungenutzt in Wärme dissipiert wird, um das Gleichgewicht zwischen Erzeugung und Verbrauch permanent zu gewährleisten. Eine Verringerung der energetischen Effizienz beim übergeordneten Betrieb des Energienetzes schlägt sich wiederum meist in einer Erhöhung des Anteil an fossilen Energiequellen und damit in einer Erhöhung von treibhauswirksamen Emissionen in die Atmosphäre nieder.

Vor diesem Hintergrund ist es Aufgabe der vorliegenden Erfindung, Wege zur Sicherstellung der Netzstabilität und/oder zur Steigerung der energetischen Effizienz beim Betrieb solcher Energieverteilnetze anzugeben. Dies soll insbesondere durch die Nutzbarmachung von zeitlichen Flexibilitäten bei regelbaren Lasten erfolgen, welche bisher nicht für die Nutzung zur Ausbalancierung von bereitgestellter und benötigter Energie zur Verfügung stehen.

Diese Aufgaben werden durch das in Anspruch 1 beschriebene Verfahren, das in Anspruch 14 beschriebene 14 System und das in Anspruch 15 beschriebene Computerprogrammprodukt gelöst.

Das erfindungsgemäße Verfahren ist ein computergestütztes Verfahren zum Regeln einer Anzahl von regelbaren Lasten in einem Energiesystem, wobei das Energiesystem innerhalb eines Energieverteilnetzes mit Energie versorgt wird. Das Verfahren umfasst die folgenden Schritte:
a) Ermitteln eines optimierten ersten Betriebsszenarios für ein zukünftiges Zeitfenster,
   - wobei das Betriebsszenario zugeordnete Lastprofile für die regelbaren Lasten des Energiesystems enthält, wodurch ein zeitlicher Verlauf eines Gesamtenergiebedarfs des Energiesystems festgelegt ist,
   - wobei anhand eines computerimplementierten Modells des Energiesystems eine Optimierung der Lastprofile im Hinblick auf von einem Betreiber des Energiesystems zu zahlende Netzentgelte erfolgt, unter der Randbedingung, dass eine vordefinierte Aufgabe mittels der Lasten des Energiesystems umgesetzt wird,
b) Empfangen einer Preisprognose für den zeitlichen Verlauf eines Energiepreises, mit dem eine vordefinierte Energiemenge in dem zukünftigen Zeitfenster auf einem kurzfristigen Energiemarkt gehandelt wird,
c) Erstellen wenigstens eines optimierten zweiten Betriebsszenarios für das zukünftige Zeitfenster,
   - wobei anhand eines computerimplementierten Modells des Energiesystems eine Optimierung der zugeordneten Lastprofile im Hinblick auf eine übergeordnete Zielfunktion erfolgt, welche zumindest die zu zahlenden Energiekosten berücksichtigt sowie einen auf dem kurzfristigen Energiemarkt erzielbaren Ertrag für die Festlegung auf den zeitlichen Verlauf des zugeordneten Gesamtenergiebedarfs (auch: Gesamt-Lastprofil),
   - wobei der erzielbare Ertrag auf Grundlage der Preisprognose ermittelt wird,
d) Ableiten (insbesondere automatisiertes Ableiten) wenigstens eines Angebots für eine verbindliche Festlegung auf den zeitlichen Verlauf des Gesamtenergiebedarfs entsprechend dem wenigstens einen zweiten Betriebsszenario,
e) Platzieren (insbesondere automatisiertes Platzieren) des wenigstens einen abgeleiteten Angebots gegenüber einem potenziellen Vertragspartner, insbesondere einem Handelspartner des kurzfristigen Energiemarkts, und
f) Umsetzen (insbesondere automatisiertes Umsetzen) eines der optimierten Betriebsszenarien durch Regeln der Lasten entsprechend den zugeordneten Lastprofilen,
   - wobei ohne Annahme eines der platzierten Angebote die Umsetzung des ersten Betriebsszenarios erfolgt und
   - wobei bei Annahme eines der platzierten Angebote die Umsetzung des zugeordneten zweiten Betriebsszenarios erfolgt.

Das Verfahren ist insgesamt "computergestützt" in dem Sinne, dass die wesentlichen Schritte des Verfahrens automatisiert auf einem oder mehreren Computern ablaufen. Der Begriff des "Computers" ist dabei breit zu verstehen und umfasst alle Geräte und Systeme, die zur elektronischen Datenverarbeitung geeignet sind, insbesondere auch cloudbasierte Systeme, Server, Clients, Embedded Systems, Edge Devices, mobile elektronische Geräte, einzelne Mikrochips sowie klassische Desktop- bzw. Laptop-Computer. Die Verfahrensschritte a) bis f) können insbesondere derart automatisiert sein, dass während ihrer Durchführung keine Interaktion eines Benutzers erforderlich ist. Insgesamt kann sich eine Interaktion des Benutzers beispielsweise auf Eingaben und/oder Voreinstellungen beschränken, die vor der Durchführung der eigentlichen Verfahrensschritte a) bis f) vorgenommen werden können. Solche Vorab-Eingaben können beispielsweise Angaben zur vom Energiesystem umzusetzenden Aufgabe umfassen und/oder die Angabe weiterer Randbedingungen, Zielkriterien und/oder Gewichtungsfaktoren für Zielkriterien, die bei der jeweiligen Optimierung in den Schritten a) bzw. c) zu berücksichtigen sind. Abgesehen von solchen Nutzereingaben können die Schritte a) bis f) insbesondere vollständig automatisiert verlaufen.

Unter einem "Energiesystem" wird allgemein eine Anordnung aus ein oder mehreren Betriebsmitteln (sogenannten Assets) verstanden, wobei die Betriebsmittel zur Umwandlung und/oder Speicherung von Energie dienen. Zumindest bei einem Teil dieser Betriebsmittel handelt es sich um "Lasten", also mit anderen Worten um Verbraucher der jeweils betrachteten Energieform. Das Energiesystem wird als elektrisches Energiesystem bezeichnet, wenn es sich bei den Betriebsmitteln zumindest teilweise um elektrische Lasten handelt. Dies ist im Zusammenhang mit der vorliegenden Erfindung besonders vorteilhaft. Zusätzlich können dabei optional auch Erzeuger elektrischer Energie und/oder elektrische Speichervorrichtungen vorliegen. Unter "Erzeugung" wird hier allgemein eine Umwandlung einer anderen Energieform in elektrische Energie verstanden und analog unter "Verbrauchen" eine Umwandlung von elektrischer Energie in eine andere Energieform. In ähnlicher Weise können die Betriebsmittel aber auch zur Umwandlung bzw. Speicherung anderer Energieformen dienen. So kann das Energiesystem z.B. thermische Betriebsmittel zur Erzeugung, Speicherung und/oder zum Verbrauch thermischer Energie umfassen. Alternativ oder zusätzlich können auch Lasten vorliegen, welche mit Gas oder einem anderen Treibstoff als Energiequelle betrieben werden.

In den Schritten a) und c) werden Betriebsszenarien für ein zukünftiges Zeitfenster erstellt, welches insbesondere für beide Schritte dasselbe Zeitfenster sein kann. Es ist "zukünftig" in dem Sinne, dass das Zeitfenster zum Zeitpunkt des Optimierens vollständig in der Zukunft liegt. Dieses Optimieren (also das Ermitteln bzw. Erstellen der Betriebsszenarien) kann insbesondere mit einem zeitlichen Vorlauf von einer halben Stunde oder mehr erfolgen. Auch die Festlegung im Rahmen des potenziell zustande kommenden Vertrags und der Abschluss dieses Vertrags können mit einem entsprechenden zeitlichen Vorlauf von z.B. wenigstens einer halben Stunde erfolgen. So können insbesondere alle Schritte a) bis e) vor Beginn des betrachteten Zeitfensters ausgeführt werden. Das Regeln der Lasten in Schritt f) wird dagegen im Wesentlichen in Echtzeit, also während des tatsächlichen Eintretens des betrachteten Zeitfensters ausgeführt. Die Länge des Zeitfensters, für das die Betriebsszenarien optimiert werden, kann prinzipiell unterschiedlich gewählt sein. So kann dessen Länge mehrere Stunden sein, insbesondere zwischen vier Stunden und 48 Stunden, beispielsweise 24 Stunden.

Durch das jeweilige "Betriebsszenario" werden Lastprofile für die regelbaren Lasten des Energiesystems festgelegt, also mit anderen Worten zeitabhängige Verläufe für die durch die jeweilige Last aufgenommene Leistung bzw. Energie. Aus einer Leistung ergibt sich jeweils durch Multiplikation mit der Länge eines betrachteten Zeitabschnitts eine Energiemenge, so dass hier in diesem Sinne die Begriffe "Leistung" und "Energie" bei äquidistanter zeitlicher Diskretisierung als äquivalent zueinander betrachtet werden. Der zeitliche Verlauf des Gesamtenergiebedarfs des Energiesystems wird zumindest mit durch die Summe der Lastprofile bestimmt. Falls zusätzlich zu den Lasten auch Erzeuger bzw. Speicher für die jeweils betrachtete Energieform vorhanden sind, wird der Gesamtenergiebedarf zusätzlich auch durch deren Leistungsprofile bestimmt, also mit anderen Worten durch die Gesamtheit der Leistungsprofile aller vorhandenen Betriebsmittel.

In Schritt a) wird ein erstes Betriebsszenario bestimmt, welches im Hinblick auf die zu zahlenden Netzentgelte optimiert ist. Bei dieser Optimierung können optional noch weitere Kriterien berücksichtigt werden wie z.B. eine möglichst hohe Energieeffizienz. Die Minimierung der Netzentgelte kann aber vorteilhaft das am stärksten gewichtete monetäre Optimierungskriterium sein. Möglicherweise können die Netzentgelte sogar das einzige Optimierungskriterium darstellen, falls andere Aspekte der umzusetzenden Aufgabe als Randbedingung berücksichtigt werden. Unter den "Netzentgelten" sind dabei insbesondere die Entgelte zu verstehen, welche von dem Betreiber des Energiesystems an den Netzbetreiber bzw. einen separaten Energieversorger zu zahlen sind (auch "Netznutzungsentgelte"). Diese Netzentgelte können typischerweise einen Arbeitspreis pro Energieeinheit (z.B. pro Kilowattstunde) und/oder einen Leistungspreis (z.B. Kilowatt aufgenommener Leistung) enthalten. Beispielsweise wird in Deutschland bei größeren Unternehmen mit einem höheren Energieverbrauch die sogenannte Registrierende Leistungsmessung (RLM) angewendet. Dieses Abrechnungssystem ist verpflichtend bei einem elektrischen Energiebedarf von 100.000 kWh pro Jahr oder mehr bzw. bei einem Gasbedarf von 1.500.000 kWh pro Jahr oder mehr. Ein RLM-Zähler (auch: Lastgangzähler) für elektrisch Energie misst beispielsweise alle Viertelstunde einen mittleren Leistungswert, ein RLM-Zähler für Gas misst typischerweise einmal in der Stunde einen mittleren Leistungswert. Für die Berechnung des Leistungspreises ist ausschließlich die Leistungsspitze relevant, also der Spitzenwert im zeitabhängigen Gesamtlastprofil des betrachteten Energiesystems. Bei der Optimierung im Hinblick auf niedrige Netzentgelte in Schritt a) wird daher insbesondere eine Minimierung der Leistungsspitzen im Lastgang angestrebt. Allgemeiner ausgedrückt wird in Schritt a) eine Optimierung im Hinblick auf Netzentgelte durchgeführt, welche vom Betreiber des Energiesystems im Rahmen eines längerfristigen Vertrags zum Bezug der benötigten Energie zu zahlen ist. Ein "längerfristiger" Vertrag ist dabei insbesondere ein Vertrag, bei welchem eine Versorgung mit Energie nach festgelegten Konditionen zumindest über mehrere Wochen erfolgt (insbesondere auch über mehrere Monate oder Jahre). Das erste Betriebsszenario ist vor allem hinsichtlich der Kosten optimiert, die im Rahmen dieses längerfristigen Vertrags entstehen.

Die "vordefinierte Aufgabe" ist insbesondere eine Kernaufgabe, die beim Betrieb des Energiesystems zu erfüllen ist. So kann das Energiesystem beispielsweise ein Klimatisierungssystem für ein Gebäude sein, und die Aufgabe kann entsprechend die Klimatisierung des Gebäudes nach bestimmten Vorgaben für Temperaturbereiche und Zeiträume sein. Nach einem anderen Beispiel kann das Energiesystem eine industrielle Fertigungsanlage sein und die Aufgabe kann der Betrieb dieser Fertigungsanlage nach vordefinierten operativen Vorgaben sein. Alternativ kann es sich um ein System zum Beladen von Elektrofahrzeugen mit elektrischer Energie handeln. All diese Anwendungen ermöglichen typischerweise eine gewisse zeitliche Flexibilität bei den Lastgängen, also mit anderen Worten eine Mehrzahl von möglichen Betriebsszenarien, mit denen die Erfüllung der Aufgabe erreicht wird. Das Energiesystem soll jedoch nicht auf die genannten Beispiele eingeschränkt sein, denn es existieren vielfältige Arten von Energiesystemen, bei welchen Flexibilitäten durch zeitliche Lastverschiebungen möglich sind. Üblicherweise ist es im Interesse des Betreibers, den Betrieb solcher Energiesysteme vor allem im Hinblick auf die Zahlung möglichst niedriger Netzentgelte zu optimieren, solange die Erfüllung der Aufgabe sichergestellt ist (und optional weitere relevante Randbedingungen eingehalten werden, wie z.B. die Begrenzung von Energieverlusten oder von Zuständen, die zur vorzeitigen Alterung der Betriebsmittel führen). Die hierbei eingesetzten Optimierungsmethoden sind grundsätzlich bekannt. Entsprechende Anwendungen von Optimierungsverfahren beim Betrieb von Energiesystemen werden z.B. in den Patentanmeldungen EP4307513A1 und EP4283811A1 sowie in der nicht vorveröffentlichten deutschen Patentanmeldung mit dem amtlichen Aktenzeichen 10 2024 208 264.3 beschrieben.

Ein Regeln der Lasten gemäß dem ersten Betriebsszenario würde also dem Stand der Technik entsprechen. Beim erfindungsgemäßen Verfahren wird aber zunächst wenigstens ein weiteres (zweites) optimiertes Betriebsszenario ermittelt, welches insbesondere im Hinblick auf den übergeordneten Betrieb des Energieverteilnetzes ein besseres Optimum darstellt. Zur Ermittlung dieses weiteren Optimums wird zunächst in Schritt b) eine Preisprognose für den Energiepreis auf einem kurzfristigen Energiemarkt empfangen. Dieses Empfangen kann insbesondere automatisiert über eine Kommunikationsschnittstelle des entsprechenden Regelungssystems erfolgen. Diese Preisprognose kann beispielsweise ein zeitlicher Verlauf für den Erwartungswert des kurzfristigen Energiepreises sein. Eine probabilistische Prognose, welche mehrere Verläufe unter Angabe der zugehörigen Wahrscheinlichkeit enthalt, ist jedoch ebenfalls denkbar. Der zeitliche Verlauf der Preisprognose kann sich beispielsweise über den gesamten Verlauf des oben beschriebenen zukünftigen Zeitfensters erstrecken. Dies ist jedoch nicht zwingend erforderlich. Es reicht vielmehr prinzipiell aus, wenn die Preisprognose einen Teilbereich des betrachteten zukünftigen Zeitfensters abdeckt, z.B. einen Zeitraum von zwei bis acht Stunden.

Der "kurzfristige Energiemarkt", für den die Preisprognose gilt, kann beispielsweise ein Energiemarkt sein, auf dem Lieferverträge für Energiemengen gehandelt werden, die noch am selben Tag oder am nächsten Tag geliefert werden sollen. Ein Beispiel für einen solchen kurzfristigen Energiemarkt ist der EPEX-Spotmarkt für elektrische Energie (EPEX für "European Power Exchange"). In jedem Fall ist der Zeithorizont für die Preisprognose wesentlich kürzer als die Zeitdauer, für die die Konditionen der oben beschriebenen Netzentgelte festgeschrieben sind. Typischerweise ist der prognostizierte Preis für einen solchen kurzfristigen Energiemarkt nicht konstant über den betrachteten Zeitraum, sondern es sind beispielsweise Preispeaks und/oder Preissenken enthalten. Die Preispeaks sind dabei Zeitspannen zugeordnet, in denen eine Knappheit der jeweiligen Energieform (z.B. durch einen besonders hohen Bedarf und/oder eine besonders niedrige Versorgung) erwartet wird. Umgekehrt sind die Preissenken denjenigen Zeitspannen zugeordnet, in denen ein Überschuss der jeweiligen Energieform (z.B. durch einen besonders niedrigen Bedarf und/oder durch eine besonders hohe Erzeugung) erwartet wird. Solche zeitabhängigen Preisprognosen können insbesondere durch sogenannte "Flexibility Trader" bereitgestellt werden, also durch Unternehmer, die mit der Ausnutzung von potenziellen Flexibilitäten an solchen kurzfristigen Energiemärkten handeln und damit zur Balancierung und Stabilisierung der Energienetze beitragen.

In Schritt c) wird basierend auf dieser Preisprognose wenigstens ein alternatives Betriebsszenario ermittelt. Dieses wird durch eine Optimierung erhalten, die einen monetären Anreiz für zeitliche Verschiebungen in den Lastprofilen des Energiesystems berücksichtigt. Der monetäre Anreiz entsteht dadurch, dass durch die Handelspartner des kurzfristigen Energiemarkts unter Umständen ein Preis für eine Vorab-Festlegung auf ein vorbestimmtes Leistungsprofil gezahlt werden kann, insbesondere dann, wenn dieses Leistungsprofil vergleichsweise niedrige Leistungsaufnahmen im Bereich der Preispeaks und/oder vergleichsweise hohe Leistungsaufnahmen im Bereich der Preissenken aufweist. Wesentlich ist, dass diese Festlegung vorab erfolgt, also mit einem zeitlichen Vorlauf vor dem Eintritt des jeweiligen Zeitfensters (also vor der Umsetzung des Betriebsszenarios). Wesentlich ist auch, dass die Festlegung verbindlich ist, denn nur dann ist sie mit einem potenziellen Ertrag verbunden. Im Rahmen der Optimierung in Schritt c) wird also insbesondere dann ein vom ersten Betriebsszenario abweichendes Optimum erhalten, wenn der damit erzielbare Ertrag über die mit der Abweichung verbundenen Mehrkosten (die im Rahmen der primären Netzentgelte zu zahlen sind) hinausgeht. Diese Mehrkosten, die im Rahmen des primären, längerfristigen Energieliefervertrags entstehen, werden auch als Opportunitätskosten bezeichnet. Der zu erwartende Ertrag für eine Vorab-Festlegung auf ein für den übergeordneten Netzbetrieb günstiges Lastprofil muss diese Opportunitätskosten zumindest aufwiegen und vorteilhaft zumindest um einen vordefinierten Schwellenwert übersteigen, damit sich der Betrieb in dem alternativen, zweiten Betriebsszenario für den Betreiber des Energiesystems finanziell lohnt.

Neben einem solchen rein monetären Zielkriterium (insbesondere als Differenz zwischen dem erwarteten Ertrag und den Opportunitätskosten) können optional auch weitere Zielkriterien bei der Optimierung in Schritt c) berücksichtigt werden. Dies können physikalische Zielkriterien und/oder operationale Zielkriterien sein. Insbesondere können als weitere Zielkriterien die gleichen physikalischen und/oder operationalen Zielkriterien berücksichtigt werden wie bei der Optimierung des ersten Betriebsszenarios in Schritt a). Mit anderen Worten kann sich die Optimierung in Schritt a) und die (wenigstens eine) Optimierung in Schritt c) dadurch unterscheiden, dass beim Schritt c) anstelle der zu zahlenden Netzentgelte die Differenz aus den zu zahlenden Netzentgelten und dem erwarteten Ertrag als monetäres Zielkriterium berücksichtigt wird. Dies kann insbesondere der einzige Unterschied bei der Aufstellung der berücksichtigten Zielkriterien sein. Beim Ermitteln eines optimierten zweiten Betriebsszenarios kann dabei die Randbedingung berücksichtigt werden, dass der erwartete Ertrag die erwarteten Mehrkosten bei den Netzentgelten um einen vordefinierten Mindestbetrag (als Schwellenwert) übersteigt. Nur für solche zweiten Betriebsszenarien, die diese Bedingung erfüllen, werden anschließend die weiteren Schritte d) und e) durchlaufen.

Beim Optimieren eines solchen zweiten Betriebsszenarios wird ein erwarteter Ertrag berechnet, welcher sich auf dem kurzfristigen Energiemarkt für die Festlegung auf das entsprechende Gesamt-Lastprofil erzielen lässt. Das Berechnen dieses Ertrags kann auch ein Schätzen sein, also z.B. das Berechnen eines Erwartungswerts. Es kann auch eine probabilistische Berechnung erfolgen, so dass für ein gegebenes Gesamt-Lastprofil unterschiedliche Erträge mit zugeordneten Eintrittswahrscheinlichkeiten verknüpft werden. In jedem Fall wird die in Schritt b) empfangene Preisprognose dabei zugrunde gelegt. Dabei wird der erwartete Ertrag ermittelt, welcher für eine Festlegung auf ein vollständiges Gesamt-Lastprofil erzielt werden kann, also mit anderen Worten nicht nur für eine Festlegung auf einzelne Leistungswerte für ausgewählte Zeitpunkte, sondern ein zeitlicher Verlauf des Gesamtenergiebedarfs für ein vorgegebenes Zeitfenster. Dies kann das gesamte oben erwähnte "zukünftige Zeitfenster" sein. Alternativ kann die berücksichtige Festlegung des Gesamt-Lastprofils aber auch nur einen Teilbereich dieses zukünftigen Zeitfensters betreffen - also dann ein kleines zweites Zeitfenster, welches innerhalb dieses ersten zukünftigen Zeitfensters liegt. Die zeitliche Länge des Zeitfensters, für das eine solche Festlegung in Betracht gezogen wird, kann beispielsweise im Bereich von einer bis mehreren Stunden sein, z.B. im Bereich zwischen zwei und acht Stunden.

In Schritt c) wird also wenigstens ein zweites Betriebsszenario ermittelt (und anhand vordefinierter Kriterien optimiert), für welches sich eine Vorab-Festlegung auf das zugehörige Gesamt-Lastprofil für den Betreiber des Energiesystems finanziell lohnt. Für dieses (wenigstens eine) zweite Betriebsszenario wird in Schritt d) ein entsprechendes Angebot für eine verbindliche Festlegung auf dieses Gesamt-Lastprofil abgeleitet. Dieses "Angebot" enthält also zum einen das zeitabhängige Gesamt-Lastprofil und zum anderen den für die Vorab-Festlegung geforderten Preis. Dieser Preis basiert auf dem oben berücksichtigten "erzielbaren Ertrag". Er kann entweder diesem "erzielbaren Ertrag" genau entsprechen oder z.B. bei konservativer Preisgestaltung mit einem Abschlag oder bei aggressiverer Preisgestaltung mit einem Aufschlag versehen sein. Dieser Abschlag und/oder Aufschlag kann insbesondere auf Erfahrungswerten beim tatsächlichen Handeln mit solchen Angeboten basieren.

In Schritt e) wird das so abgeleitete (wenigstens eine) Angebot gegenüber einem potenziellen Vertragspartner platziert. Dieser potenzielle Vertragspartner kann insbesondere ein sogenannter "Flexibility Trader" sein, also ein Marktteilnehmer (ein Handelspartner) des oben genannten kurzfristigen Energiemarkts. Es ist also nicht unbedingt nötig, dass der Betreiber des Energiesystems selbst auf dem kurzfristigen Energiemarkt handelt. Dieses Szenario ist zwar auch möglich, es reicht aber grundsätzlich aus, wenn er mit einem "Flexibility Trader" einen bilateralen Vertrag über die Festlegung auf das vorab berechnete Gesamt-Lastprofil abschließt. Dieser bilaterale Vertrag kommt durch das Platzieren des Angebots gemäß Schritt e) und durch die Annahme dieses Angebots seitens des Handelspartners zustande. Wesentlich ist, dass hierbei ein für die Vertragsparteien rechtlich bindender Vertrag zustande kommt, z.B. entsprechend den Paragrafen §§ 145 bis 156 des deutschen Bürgerlichen Gesetzbuchs (BGB). Dieser Vertrag kommt auf Grundlage der computergestützten Berechnungen in den Schritten c) und d) sowie durch das automatische Platzieren des Angebots in Schritt e) automatisiert zustande, z.B. nach den Grundsätzen des § 312i BGB. Dabei entsteht eine rechtliche Bindung zwischen dem Betreiber des Energiesystems und dem Vertragspartner, wodurch der Betreiber des Energiesystems zur versprochenen Festlegung auf das Gesamt-Lastprofil verpflichtet wird und der Vertragspartner zur Zahlung des vereinbarten Preises für diese Festlegung verpflichtet wird. Für ein späteres Abweichen von der versprochenen Festlegung kann dabei insbesondere eine Vertragsstrafe zulasten des Betreibers des Energiesystems vereinbart werden.

Bei dem Regeln der Lasten in Schritt f) wird unterschieden, ob nach dem oben beschriebenen Ablauf ein Vertrag über eine Vorab-Festlegung zustande gekommen ist oder nicht. Dies kann also allgemein zunächst im Rahmen des Schritts f) geprüft werden. Falls kein solcher Vertrag zustande gekommen ist, erfolgt eine Umsetzung des ersten Betriebsszenarios. Mit anderen Worten werden dann die Lasten des Energiesystems entsprechend den Lastprofilen geregelt, wie sie ohne Berücksichtigung einer solchen Vorab-Festlegung optimiert worden sind. Dies entspricht im Wesentlichen dem Vorgehen aus dem Stand der Technik. Falls aber ein Vertrag über eine Vorab-Festlegung auf ein zweites Betriebsszenario zustande gekommen ist, werden die Lasten des Energiesystems entsprechend den Lastprofilen für dieses zweite Betriebsszenario geregelt.

Allgemein vorteilhaft kommt es während der Betriebsdauer des Energiesystems zumindest für ein zweites Betriebsszenario zu einer Annahme des entsprechenden Angebots, so dass zumindest für einen Durchlauf durch Schritt f) eine Regelung gemäß einem solchen zweiten Betriebsszenario erfolgt. Insgesamt können die genannten Schritte a) bis f) in einer übergeordneten Schleife mehrfach durchlaufen werden, wobei insbesondere das betrachtete zukünftige Zeitfenster zwischen den Durchläufen zeitlich vorrückt. Dieses "Vorrücken" kann dem tatsächlichen Verstreichen der Zeit zwischen den einzelnen Schleifendurchläufen entsprechen oder zumindest mit diesem gekoppelt sein. Bei einer solchen iterativen Umsetzung des Verfahrens kann dann zumindest für einen Teil der Durchläufe durch Schritt f) eine Regelung gemäß einem vorab festgelegten (und an einen Vertragspartner "verkauften") zweiten Betriebsszenario erfolgen.

Insgesamt werden durch die Umsetzung des zweiten Betriebsszenarios die oben beschriebenen Aufgaben der Erfindung erreicht: Durch die Optimierung im Hinblick auf den erwarteten Ertrag auf dem kurzfristigen Energiemarkt wird eine Anhäufung von abzurufender Leistung in den Zeiträumen erreicht, in denen der kurzfristige Energiepreis niedrig sein wird und im Energieverteilnetz ein Überangebot erwartet wird. Umgekehrt wird eine Erniedrigung von abzurufender Leistung in den Zeiträumen erreicht, in denen der kurzfristige Energiepreis hoch sein wird und im Energieverteilnetz ein Unterangebot erwartet wird. Durch Ausnutzung eines monetären Anreizes wird der Betreiber des Energiesystems dazu motiviert, ein solches zweites Betriebsszenario umzusetzen, wodurch insgesamt eine höhere Netzstabilität beim Betrieb des übergeordneten Energieverteilnetzes erreicht wird. Alternativ oder zusätzlich zu der Verbesserung der Netzstabilität kann sich die zeitliche Verschiebung des Leistungsabrufs in Zeiten des Überangebots auch in einer höheren Energieeffizienz und niedrigeren treibhauswirksamen Emissionen beim Betrieb des Energieverteilnetzes auswirken, z.B. dadurch, dass mehr erneuerbare Energien unmittelbar genutzt werden können, dass weniger Energie verlustbehaftet zwischengespeichert werden muss, dass weniger Energie unnötig "vernichtet" (dissipiert) werden muss und/oder dass weniger herkömmliche Kraftwerke zur Überbrückung von Leistungsengpässen dazugeschaltet werden müssen.

Hierbei erzielt der Betreiber des Energiesystems jeweils einen kleinen monetären Gewinn, und er muss insbesondere keine wesentlichen Nachteile in Kauf nehmen. Durch die Wahl der Zielkriterien und Randbedingungen bei der Optimierung in Schritt c) kann sichergestellt werden, dass die vorgegebene Aufgabe trotzdem hinreichend erfüllt wird. So kann hier insbesondere die rechtzeitige Erfüllung der Aufgabe (z.B. bei der Temperierung eines Gebäudes o.ä.) gefordert werden, und die energetischen Verluste durch die Verschiebung der Laste können begrenzt werden. All dies ist durch entsprechende Voreinstellungen und/oder Nutzereingaben hinsichtlich der Randbedingungen und Zielkriterien und insbesondere ihrer Gewichtung möglich. Ein wesentlicher Unterschied zum herkömmlichen "Demand Side Management" in Echtzeit ist also, dass der Betreiber des Energiesystems trotzdem die Hoheit über die Regelung seiner Betriebsmittel behält und nur eine Nutzung solcher Flexibilitäten ermöglicht, die mit seinen Prioritäten und Betriebszielen kompatibel sind und die vorab durch eine von ihm betriebene Software im Rahmen der Optimierung in Schritt c) auf Grundlage einer Modellierung freigeben worden sind. Durch diese Vorab-Modellierung ist sichergestellt, dass auch für den Betreiber des Energiesystems die Vorteile bei der Nutzbarmachung der Flexibilitäten überwiegen.

Die Vorteile des erfindungsgemäßen Systems und des erfindungsgemäßen Computerprogrammprodukts ergeben sich analog zu den oben beschriebenen Vorteilen des erfindungsgemäßen Verfahrens. Bei dem erfindungsgemäßen Regelungssystem kann insbesondere dieselbe Optimierungseinrichtung für die Schritte a) und c) genutzt werden, wobei nur unterschiedliche Zielfunktionen verwendet werden.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Verfahrens auch bei dem System und/oder dem Computerprogrammprodukt realisiert werden, und umgekehrt.

Gemäß einer allgemein vorteilhaften Ausführungsform kann das Energieverteilnetz ein elektrisches Energieverteilnetz sein. In elektrischen Netzen ist das Balancieren von bereitgestellter und aufgenommener Leistung zu jedem Zeitpunkt besonders wichtig, da die Speicherung von elektrischer Energie besonders aufwendig ist und typischerweise auch mit signifikanten energetischen Verlusten verbunden ist. Dementsprechend ist die Nutzung von zeitlichen Flexibilitäten der Verbraucher besonders wichtig, und die Vorteile der Erfindung kommen hier besonders wirksam zum Tragen. Entsprechend kann es sich dann bei dem regelbaren Lasten (zumindest teilweise) um elektrische Verbraucher handeln. Alternativ kann es sich aber prinzipiell auch um ein Verteilnetz für eine andere Energieart handeln, beispielsweise ein Verteilnetz für thermische Energie (unter Nutzung von entsprechenden Medien zur Übertragung von Wärme und/oder "Kälte" in einen zu temperierenden Zielbereich) oder ein Verteilnetz für Gas oder einen anderen Brennstoff.

Die Anzahl der Lasten kann grundsätzlich eins sein, insbesondere kann aber auch eine Mehrzahl von Lasten im Energiesystem vorhanden sein, z.B. 10 oder mehr. Diese Mehrzahl von Lasten kann bevorzugt durch ein zentrales Regelungssystem gemeinsam geregelt werden, was die Ausnutzung von zeitlichen Flexibilitäten erleichtert. Zusätzlich zu der Anzahl von Lasten kann das Energiesystem auch einen oder mehrere Energieerzeuger und/oder einen oder mehrere Speicher für die betrachtete Energieform aufweisen. So kann beispielsweise eine Photovoltaikanlage und/oder eine Windkraftanlage zur Erzeugung von erneuerbarer elektrischer Energie im Energiesystem vorhanden sein. Weiterhin können ein oder mehrere Batterien (Akkumulatoren) zur Speicherung von elektrischer Energie vorliegen, mit denen durch zeitliche Verschiebung von Lasten weitere Flexibilitäten zur Verfügung gestellt werden können.

Gemäß einer vorteilhaften Ausführungsform kann bei der Optimierung der Lastprofile in den Schritten a) und/oder c) wenigstens eine physikalische Größe als Optimierungskriterium berücksichtigt werden. Alternativ oder zusätzlich kann eine solche physikalische Größe für die Aufstellung einer einzuhaltenden Randbedingung verwendet werden, z.B. indem zulässige Grenzwerte oder Wertebereiche für solche Größen vorgegeben werden. Diese zusätzlichen Optimierungskriterien und/oder Randbedingungen können insbesondere bei den Optimierungen in den Schritten a) und c) gleich sein. Relevante technische Größen sind in diesem Zusammenhang:
- eine energetische Effizienz beim Betrieb des Energiesystems,
- eine Anzahl von umzusetzenden Schaltvorgängen in Geräten des Energiesystems,
- eine Alterung von Geräten des Energiesystems durch den Betrieb.

So können z.B. die energetischen Verluste, die durch die Ausnutzung der zeitlichen Flexibilitäten verursacht werden, auf bestimmte (absolute und/oder relative) Höchstwerte begrenzt werden bzw. die Höhe der Verluste kann als Optimierungskriterium in die Zielfunktion eingehen. Auch die Anzahl der benötigten Schaltvorgänge kann als Kriterium oder durch die Vorgabe von Grenzen berücksichtigt werden, z.B. wenn solche Schaltvorgänge zur vorzeitigen Alterung der Geräte und/oder wiederum zu energetischen Verlusten bzw. zu risikobehafteten Betriebszuständen führen können. Auch die Alterung der Geräte für sich kann berücksichtigt werden, z.B. indem die Vermeidung von besonders hohen Leistungsspitzen ein Optimierungskriterium darstellt bzw. indem Grenzwerte für Anzahl, Höhe und/oder Dauer solcher Leistungsspitzen vorgegeben werden.

Alternativ oder zusätzlich zu solchen physikalischen Parametern kann bei der Optimierung der Lastprofile in den Schritten a) und/oder c) wenigstens eine operationale Größe als Optimierungskriterium berücksichtigt werden. Alternativ oder zusätzlich kann eine solche operationale Größe für die Aufstellung einer einzuhaltenden Randbedingung verwendet werden, z.B. indem zulässige Grenzwerte oder Wertebereiche für solche Größen vorgegeben werden. Diese zusätzlichen Optimierungskriterien und/oder Randbedingungen können insbesondere bei den Optimierungen in den Schritten a) und c) gleich sein. Relevante operationale Größen sind in diesem Zusammenhang:
- ein Zeitpunkt oder Zeitfenster für das Umsetzen der vordefinierten Aufgabe oder einer vorgegebenen Teilaufgabe davon,
- eine prognostizierte Wahrscheinlichkeit für das erfolgreiche Umsetzen der vordefinierten Aufgabe oder einer vorgegebenen Teilaufgabe davon.

So kann z.B. gefordert sein, dass eine bestimmte Teilaufgabe der übergeordneten Aufgabe (z.B. die Klimatisierung eines Raums auf einen vorgegebenen Temperaturbereich, der Abschluss eines Fertigungsschritts oder das Erreichen eines Ladezustands eines Elektrofahrzeugs) spätestens zu einem festgesetzten Zeitpunkt erreicht ist. Die zeitliche Flexibilität kann dann insbesondere darin liegen, dass die Aufgabe schon früher umgesetzt werden darf. Der prognostizierte Zeitpunkt der Erledigung kann auch als Zielkriterium bei der Optimierung eingehen, etwa wenn kein zwingender Abschlusstermin vorgeschrieben ist, eine frühzeitige Umsetzung aber wünschenswert ist. Alternativ oder zusätzlich kann über die prognostizierte Wahrscheinlichkeit für das erfolgreiche Umsetzen das Risiko eines Scheiterns bei ein oder mehreren Teilaufgaben berücksichtigt werden. Ein solches Risiko kann ebenfalls in der Zielfunktion berücksichtigt werden oder über eine Randbedingung auf einen vorgebebene Höchstwert begrenzt werden, um zu große Nachteile beim Betrieb zu vermeiden.

Gemäß einer allgemein bevorzugten Ausführungsvariante kann in Schritt c) eine Mehrzahl von optimierten zweiten Betriebsszenarien erstellt werden. Mit anderen Worten können auf Grundlage des Modells mehrere unterschiedliche Möglichkeiten abgeleitet werden, mit denen durch Nutzung zeitlicher Flexibilitäten ein Ertrag für die vorzeitige Festlegung auf einen günstigen Leistungsverlauf erzielt werden kann. Der Unterschied zwischen diesen einzelnen Möglichkeiten kann sich beispielsweise daraus ergeben, dass bei der Optimierung unterschiedliche Randbedingungen vorgegeben werden. Insbesondere kann eine der berechneten Möglichkeiten ein Gesamt-Optimum bezüglich der übergeordneten Zielfunktion (ggf. bei Beachtung übergeordneter Randbedingungen) darstellen. Zusätzlich zu diesem Gesamt-Optimum können weitere Möglichkeiten dadurch abgeleitet werden, dass die Menge der zeitlichen Verschiebung von Lastverläufen gegenüber dem ersten Betriebsszenario auf bestimmte vorgegebene Werte begrenzt wird. Durch eine solche Begrenzung des Ausmaßes der genutzten Flexibilität können alternative Angebote ermittelt und platziert werden, durch welche ebenfalls ein Beitrag zur Netzstabilität geleistet werden kann, bei welchen aber geringere Nachteile bezüglich anderer Parameter (z.B. der oben genannten physikalischen und operationalen Größen) in Kauf genommen werden müssen. Der Beitrag zu Netzstabilisierung ist dann zwar geringer, aber er kann unter Umständen zu einem geringeren spezifischen Preis (insb. dem Preis pro verschobener Energiemenge) realisiert werden.

Gemäß einer vorteilhaften Weiterbildung dieser Ausführungsform wird auch eine entsprechende Mehrzahl von Angeboten aus diesen zweiten Betriebsszenarien abgeleitet und gegenüber einem potenziellen Vertragspartner platziert. Diese Mehrzahl wird dann bei der automatisierten Angebotsgestaltung im elektronischen Geschäftsverkehr insbesondere so platziert, dass nur eines der Angebote angenommen kann. Entsprechend wird dann in Schritt f) das Betriebsszenario zu dem von dem Handelspartner ausgewählten und angenommenen Angebot umgesetzt.

Gemäß einer ersten vorteilhaften Variante dieser Ausführungsform kann zumindest eine Teilmenge der abgeleiteten Angebote gleichzeitig platziert werden. Dies geschieht wiederum so, dass nur eines der gleichzeitig abgegebenen Angebote angenommen werden kann. Dem potenziellen Vertragspartner wird also die Wahl zwischen unterschiedlichen Festlegungen überlassen. Die einzelnen Betriebsszenarien können sich insbesondere hinsichtlich der gegenüber dem ersten Betriebsszenario verschobenen Energiemengen und/oder hinsichtlich des Preises unterscheiden. Durch die Auswahlmöglichkeit wird erreicht, dass die Mechanismen des Marktes zusätzlich dazu beitragen, das beste Betriebsszenario im Hinblick auf die Vorteile bei der übergeordneten Netzstabilisierung und die dabei in Kauf genommenen Nachteile beim Betrieb des lokalen Energiesystems auszuwählen.

Gemäß einer zweiten vorteilhaften Variante dieser Ausführungsform kann zumindest eine Teilmenge sequenziell platziert werden. Dabei können insbesondere solche Angebote früher platziert werden, für welche eine vergleichsweise bessere Optimierung im Hinblick auf die übergeordnete Zielfunktion erreicht wurde. Mit anderen Worten werden dann die für den Betreiber des Energiesystems lukrativsten Betriebsszenarien zuerst angeboten. Nur wenn es dabei nicht zu einem Vertragsschluss kommt, können sukzessive ein oder mehrere weitere Angebote platziert werden, bei denen die zugehörigen Betriebsszenarien zwar immer noch insgesamt günstiger sind als das erste Betriebsszenario, bei denen aber ein geringerer Vorteil in Bezug auf die Ausnutzung der zeitlichen Flexibilität erreicht wird. Allgemein ist es auch möglich, die erste und zweite Variante miteinander zu kombinieren. Hierbei wird also eine Teilmenge der abgeleiteten Angebote gleichzeitig platziert. Ein anderer Teil dieser Angebote kann danach sukzessive zusätzlich platziert werden (einzeln oder gebündelt), falls es in der ersten Runde nicht zu einer Annahme eines Angebots kommt.

Gemäß einer weiteren allgemein vorteilhaften Ausführungsform kann im Falle der Annahme eines Angebots durch einen Vertragspartner im Zuge der Umsetzung eines zweiten Betriebsszenarios in Schritt f) geprüft werden, ob die verbindliche Festlegung erreicht wurde. Diese Überprüfung kann prinzipiell durch den Vertragspartner und/oder durch den Betreiber des Energiesystems erfolgen. Sie kann in jedem Fall vorteilhaft automatisiert erfolgen. Falls der verbindlich festgelegte zeitliche Verlauf des Gesamtenergiebedarfs nicht eingehalten wurde, kann eine Vertragsstrafe fällig werden. Diese kann insbesondere eine Ausgleichszahlung an den Vertragspartner beinhalten. Die Ausgleichszahlung kann beispielsweise dann fällig werden, wenn eine Abweichung zwischen dem vorab versprochenen zeitlichen Verlauf und dem tatsächlich eingetretenen zeitlichen Verlauf einen vorbestimmten (relativen und/oder absoluten) Schwellenwert übersteigt. Eine solche Ausgleichszahlung kann insbesondere auch in Form einer automatisierten Erstattung durch das Regelungssystem erfolgen. Durch die Ausgleichszahlung kommt in jedem Fall zum Ausdruck, dass es sich bei dem Festlegen auf einen Gesamtenergieverlauf tatsächlich um einen verbindlichen Vertrag handelt und nicht nur um die Zusicherung eines Bemühens. Falls im Falle des Nichterreichens eine Ausgleichszahlung ausgelöst wird, ist es vorteilhaft, wenn in der übergeordneten Zielfunktion sowohl die Höhe als auch eine prognostizierte Wahrscheinlichkeit für das Fälligwerden der Ausgleichszahlung berücksichtigt werden. Mit anderen Worten kann das finanzielle Risiko der Nichterfüllung bereits bei der Optimierung eingepreist werden. So wird die Berechnung eines Optimums ermöglicht, bei der auch dieser potenzielle Nachteil angemessen berücksichtigt ist.

Gemäß einer vorteilhaften Ausgestaltung kann beim Erstellen des jeweiligen ersten und/oder zweiten Betriebsszenarios ein Datensatz mit weiteren Prognosedaten verwendet werden. Dabei können bei der Optimierung in Schritt a) und der entsprechenden Optimierung in Schritt c) wiederum vorteilhaft dieselben Prognosedaten zum Einsatz kommen. Der Datensatz kann insbesondere Prognosedaten umfassen, welche ein oder mehrere der folgenden Größen enthalten und/oder diese Größen beeinflussen:
- Wetterparameter, insbesondere eine Umgebungstemperatur, eine Sonneneinstrahlung und/oder eine Windgeschwindigkeit im Bereich des betrachteten Energiesystems,
- Auslastungsparameter für ein Gebäude, in dem das Energiesystem angeordnet ist, insbesondere ein Bürogebäude, ein Wohngebäude oder ein Fabrikgebäude,
- Auslastungsparameter für eine Fertigungsanlage, in dem das Energiesystem angeordnet ist,
- Auslastungsparameter für eine Flotte von Fahrzeugen, die durch das Energiesystem mit Energie versorgt werden.

Mit anderen Worten können Prognosedaten in die Optimierung einfließen, welche die Anforderungen an den lokalen Betrieb des Energiesystems betreffen bzw. beeinflussen. Die Prognosedaten können prinzipiell den Lastverlauf (also das Verhalten der Verbraucher) und/oder den Verlauf der lokalen Energieerzeugung widerspiegeln. So können die Wetterparameter insbesondere die Wetterparameter in der lokalen Umgebung des Energiesystems sein. Durch solche Wetterparameter kann einerseits die erwartete Leistungsaufnahme (z.B. bei Klimatisierungsaufgaben) und andererseits die erwartete lokale Energieerzeugung durch erneuerbare Energiequellen beeinflusst werden. Wenn das Energiesystem für den Betrieb eines Gebäudes ausgelegt ist, dann können Prognosen über die Nutzung des Gebäudes relevant sein. Dabei ist eine kommerzielle Nutzung besonders relevant, wie z.B. die erwartete Auslastung eines Bürogebäudes, eine Fabrikgebäudes oder eines Gebäudes für anderweitige kommerzielle Dienstleistungen. Aber auch Prognosen über die Nutzung eines Wohngebäudes können hier einfließen. So können demographische Daten oder Erfahrungswerte über die Gebäudenutzung in die Prognose einfließen. In ähnlicher Weise kann eine Prognose zur Auslastung einer Fertigungsanlage oder einer Flotte von elektrischen Fahrzeugen in die Modellierung einfließen. Dies sind jedoch nur ausgewählte Beispiele und es können zahlreiche weitere Prognosedaten in die Modellierung des Verhaltens des Energiesystems im Hinblick auf die zu erfüllende Aufgabe eingehen.

Allgemein vorteilhaft kann in Schritt a) und/oder in Schritt c) ein Modell der künstlichen Intelligenz zum Einsatz kommen. Dies kann insbesondere bei der Erstellung des oben genannten Datensatzes mit weiteren Prognosedaten vorteilhaft sein, da solche Prognosedaten (z.B. über lokale Wetter- und Auslastungsparameter) stark auf Erfahrungswerten basieren. Daher können beim Erstellen solcher Prognosedaten insbesondere die Vorteile des maschinellen Lernens zum Einsatz kommen. Unter einem "Modell der künstlichen Intelligenz" (kurz: Kl-Modell) soll hier allgemein eine strukturierte, auf mathematischen oder statistischen Verfahren beruhende Repräsentation eines algorithmischen Systems verstanden werden. Ein solches Kl-Modell wird typischerweise mittels Trainingsdaten erstellt und dient dazu, Aufgaben durch Nachbildung kognitiver Fähigkeiten, insbesondere Mustererkennung, Entscheidungsfindung, Klassifikation oder Vorhersage, automatisiert auszuführen. Das Kl-Modell umfasst typischerweise eine Menge von Parametern und eine definierte Architektur (z. B. ein künstliches neuronales Netzwerk), die im Rahmen eines Trainingsprozesses durch maschinelles Lernen optimiert wurden und die das Verhalten des Modells bei der Verarbeitung von Eingabedaten bestimmen. Das bei der entsprechenden Modellierung eingesetzte Kl-System enthält mindest eine Komponente, deren Ausgaben auf Verarbeitungs- bzw. Entscheidungsmustern beruhen, die sie zuvor in einer Lernphase auf Basis großer Datenmengen selbst generiert hat. Alternativ oder zusätzlich zur Erstellung der lokalen Prognosedaten kann ein solches KI-Modell aber auch bei anderen Verfahrenschritten zum Einsatz kommen, insbesondere bei der Durchführung der Optimierungen in den Schritten a) und c), beim Ableiten des wenigstens einen Angebots und/oder beim Regeln der Lasten. Dies ist jedoch nicht zwingend erforderlich. Sowohl die Erstellung der Prognosedaten als auch die übrigen Verfahrensschritte können prinzipiell auch mittels regelbasierter Algorithmen automatisiert ausgeführt werden.

Gemäß einer vorteilhaften Weiterbildung der Ausführungsformen mit einem KI-Modell kann dieses Kl-Modell mit einem Verfahren des maschinellen Lernens vortrainiert worden sein. Dabei können insbesondere Trainingsdaten verwendet worden sein, welche spezifisch für die Ausgestaltung des Energiesystems mit konkreten regelbaren Lasten sowie optionalen zusätzlichen Erzeugern und/oder Speichern sind. Mit anderen Worten können dabei die Eigenschaften und/oder der Aufbau des konkreten Energiesystems berücksichtigt werden. Alternativ oder zusätzlich können bei einem solchen Vortraining die Besonderheiten der vom Betriebssystem zu erfüllenden Aufgabe berücksichtigt werden. Das Training des Kl-Modells kann beispielsweise anhand von synthetischen Trainingsdaten erfolgen, welche auf der Grundlage eines physikalischen Simulationsmodells erstellt worden sind. Das Training kann beispielsweise mit dem Verfahren des Bestärkenden Lernens (englisch: "Reinforcement Learning") erfolgt sein. Beim Trainieren eines Kl-Modells für die Optimierungsschritte kann insbesondere eine Belohnungsfunktion ("Reward Function") zum Einsatz kommen, welche der oben beschriebenen Zielfunktion entspricht bzw. diese nachbildet.

Besonders vorteilhaft kann ein solches Kl-Modell im laufenden Betrieb des Energiesystems weiter trainiert werden. Auch hierbei kann beispielsweise das Verfahren des Reinforcement Learning zum Einsatz kommen. Dies kann insbesondere durch Bewertung der in Schritt f) tatsächlich umgesetzten Betriebsszenarien im Hinblick auf monetäre, physikalische und/oder operationale Kriterien erfolgen. Auch hier kann insbesondere eine Bewertung über eine Belohnungsfunktion erfolgen, welche die oben beschriebene Zielfunktion nachbildet. Allgemein kann zumindest eine Bewertung im Hinblick auf die Netto-Energiekosten erfolgen. Dabei ist unter "Netto-Energiekosten" die Gesamtsumme zu verstehen, die sich aus den Netzentgelten, den (mit umgekehrtem Vorzeichen angesetzten) Erträgen für die verkauften Festlegungen und optional möglicherweise anfallenden Ausgleichszahlungen ergibt. So kann im laufenden Betrieb eine noch weitergehende Optimierung des verwendeten Modells im Hinblick auf die relevanten Zielkriterien erreicht werden.

Nachfolgend wird die Erfindung anhand einiger bevorzugter Ausführungsbeispiele unter Bezugnahme auf die angehängten Zeichnungen beschrieben, in denen:
- Figur 1: eine schematische Darstellung ausgewählter Interaktionen zwischen einzelnen Systemen und Teilnehmern zeigt, welche den Betrieb eines Energieverteilnetzes beeinflussen,
- Figur 2: eine ähnliche Darstellung ausgewählter Interaktionen im Rahmen eines Ausführungsbeispiels der Erfindung zeigt,
- Figur 3: ein schematisches Ablaufdiagramm für ein beispielhaftes Verfahren gemäß der Erfindung zeigt und
- Figur 4: eine schematische Darstellung von Lastprofilen gemäß unterschiedlichen Betriebsszenarien zeigt.

In den Figuren sind gleiche oder funktionsgleiche Elemente mit gleichen Bezugszeichen versehen.

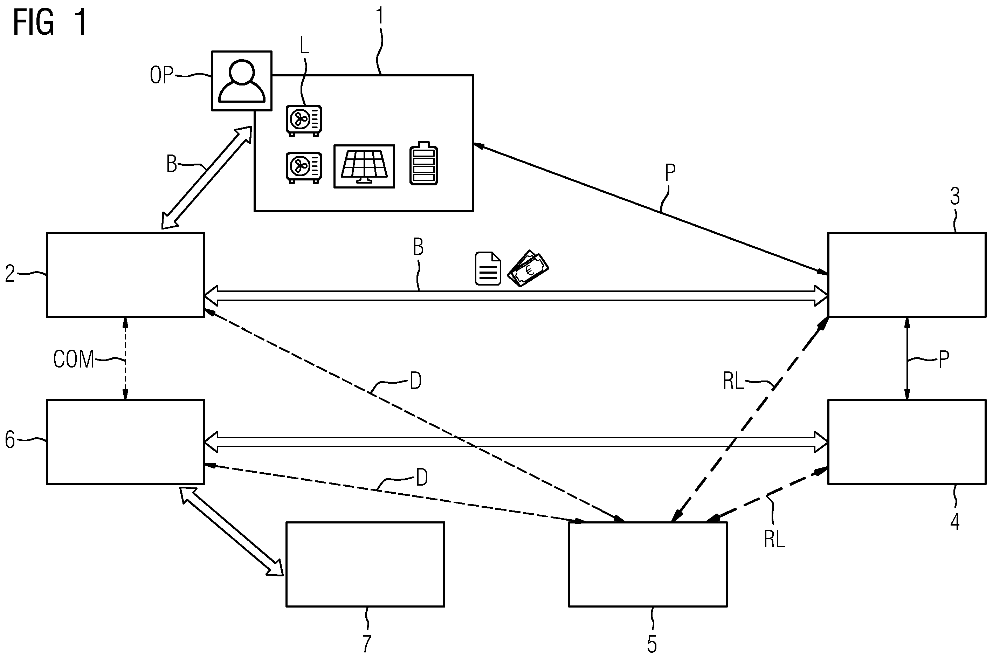

In Figur 1 ist eine schematische Darstellung ausgewählter Systeme und Teilnehmer gezeigt, welche den Betrieb eines übergeordneten Energieverteilnetzes beeinflussen. Bei dem Energieverteilnetz handelt es sich in diesem Beispiel um ein Stromnetz. Gezeigt sind mehrere Systeme 1 bis 7, welche typischerweise eine Rolle bei der Balancierung der Leistungsflüsse in einem solchen Stromnetz spielen. Zusätzlich sind ausgewählte Interaktionen zwischen den gezeigten Systemen bzw. die Verantwortlichkeiten der zugeordneten Betreiber dargestellt.

So bezeichnet 1 ein elektrisches Energiesystem, dessen elektrische Betriebsmittel innerhalb eines Stromnetzes mit elektrischer Energie versorgt werden. Nur beispielhaft sind hier als Betriebsmittel zwei Lasten L (elektrische Verbraucher) gezeigt. Außerdem ist durch entsprechende Piktogramme angedeutet, dass optional auch Erzeuger und/oder Speichervorrichtungen für elektrische Energie in dem Energiesystem 1 vorhanden sein können. Das Energiesystem 1 ist in ein lokales Verteilnetz eingebunden, welches von einem Verteilnetzbetreiber 3 betrieben wird. Es liegt also in der Verantwortung des Verteilnetzbetreibers 3, einen Leistungsfluss P vom Stromnetz zum Energiesystem 1 bzw. umgekehrt zu ermöglichen. Der Verteilnetzbetreiber 3 interagiert mit einem Übertragungsnetzbetreiber 4, um die Energieversorgung des lokalen Verteilnetzes aus einem übergeordneten Übertragungsnetz sicherzustellen. Entsprechend kommt es auch zwischen den zugeordneten Netzen (Verteilnetz und Übertragungsnetz) zu elektrischen Leistungsflüssen P. Für alle Leistungsflüsse gilt, dass aufgenommene und bereitgestellte Leistung zu jedem Zeitpunkt ausbalanciert sein müssen, um die Netzstabilität zu gewährleisten. Hierzu werden weitere Systeme eingesetzt, um sogenannte Regelleistung RL zur Verfügung zu stellen. Mit 5 ist hier ein solcher Anbieter für Regelleistung bezeichnet (ein "Balance Service Provider"), welcher Regelleistung zur Ausbalancierung der Leistungsflüsse im lokalen Verteilnetz und/oder im übergeordneten Übertragungsnetz zur Verfügung stellen kann. Um alle diese Aufgaben gleichzeitig zu erfüllen und insgesamt die Netzstabilität zu gewährleisten, liegen typischerweise verschiedene Geschäftsbeziehungen zwischen den Betreibern der einzelnen Systeme vor.

Mit OP ist hier der Betreiber des Energiesystems 1 bezeichnet. Allgemein finden die Leistungsflüsse und der automatisierte Datenaustausch zwischen den beschriebenen technischen Systemen statt, und die zugrundeliegenden Geschäftsbeziehungen liegen zwischen den Betreibern der Systeme vor. Dieser Unterschied ist hier nur für das Energiesystem 1 und dessen Betreiber OP konkret darstellt. Bei den anderen Einheiten wird der Übersichtlichkeit halber nicht näher zwischen den technischen Systemen und deren Betreibern unterschieden. Die "Betreiber" der Systeme können prinzipiell natürliche Personen oder Unternehmen (als juristische Personen) sein. Mit den vier offenen Blockpfeilen sind hier die wichtigsten Geschäftsbeziehungen B zwischen den einzelnen Betreibern gekennzeichnet. Typischerweise ist eine solche Geschäftsbeziehung B durch ein oder mehrere Verträge und durch entsprechende Geldflüsse charakterisiert, wie durch die Piktogramme angedeutet. So besteht zwischen dem Betreiber OP des Energiesystems 1 und einem Energieversorger 2 ein Vertrag über die Versorgung mit elektrischer Energie im Austausch gegen vertraglich festgelegte Netzentgelte.

Der Energieversorger 2 steht wiederum in einer Geschäftsbeziehung B mit dem Verteilnetzbetreiber 3, der somit indirekt für die im Stromnetz bereitgestellte Leistung vergütet wird. Prinzipiell könnten die Rollen des Energieversorgers 2 und des Verteilnetzbetreibers 3 auch in einem Unternehmen zusammenfallen. Zumindest in Deutschland ist jedoch seit einigen Jahren eine Trennung dieser Rollen gesetzlich vorgeschrieben. Eine weitere wichtige Verantwortlichkeit bei der Stabilisierung des Stromnetzes liegt bei der Rolle des sogenannten "Flexibility Traders" 6. Dieser ist ein Handelspartner, der auf einem kurzfristigen Energiemarkt 7 mit zeitlich festgelegen Energiemengen handelt. Im Rahmen dieses Handels bestehen daher Geschäftsbeziehungen zwischen dem Flexibility Trader 6 und anderen Teilnehmern des kurzfristigen Energiemarkts 7 und außerdem zwischen dem Flexibility Trader 6 und dem Übertragungsnetzbetreiber 4. Durch die Handelstätigkeit auf dem kurzfristigen Energiemarkt 7 wird erreicht, dass die Kräfte des Marktes (hohe Preise bei Knappheit und niedrige Preise bei Überschuss von momentaner Leistung) zu einer Stabilisierung des Stromnetzes beitragen. Um dies zu erreichen, steht der Flexibility Trader 6 in ständigem Informationsaustausch mit anderen Systemen. Beispielsweise werden über eine Kommunikationsschnittstelle COM Prognosedaten zu Netzzuständen und/oder zur Preisentwicklung mit dem Energieversorger 2 ausgetauscht. Auch beim Balance Service Provider 5 bestehen Datenschnittstellen zum Energieversorger 2 und zum Flexibility Trader 6, über die Daten zur Balancierung des Stromnetzes ausgetauscht werden können.

Die Darstellung der einzelnen Systeme und Marktteilnehmer soll nur äußerst schematisch verdeutlichen, wie komplex die technischen und geschäftlichen Beziehungen bei der ständigen Ausbalancierung der Leistungsflüsse in einem Energieverteilnetz sind. Dabei erhebt die Darstellung keinen Anspruch auf Vollständigkeit, und es sind auch zahlreiche Variationen der hier dargestellten Interaktionen möglich. Die in Figur 1 gezeigten Beziehungen stellen dabei im Wesentlichen den Stand der Technik dar, bei dem ein lokales Energiesystem 1 (z.B. in einer kommerziellen Anlage oder einem Gebäude) aus einem Verteilnetz mit elektrischer Energie versorgt wird, und die dafür anfallenden Netzentgelte an einen Energieversorger 2 bezahlt werden. Bei Unternehmenskunden wird dabei typischerweise die registrierende Leistungsmessung angewandt. Dadurch ist es für den Betreiber OP wirtschaftlich, den Betrieb des Energiesystems 1 im Hinblick auf die Begrenzung von Leistungsspitzen im Gesamtlastprofil zu optimieren.

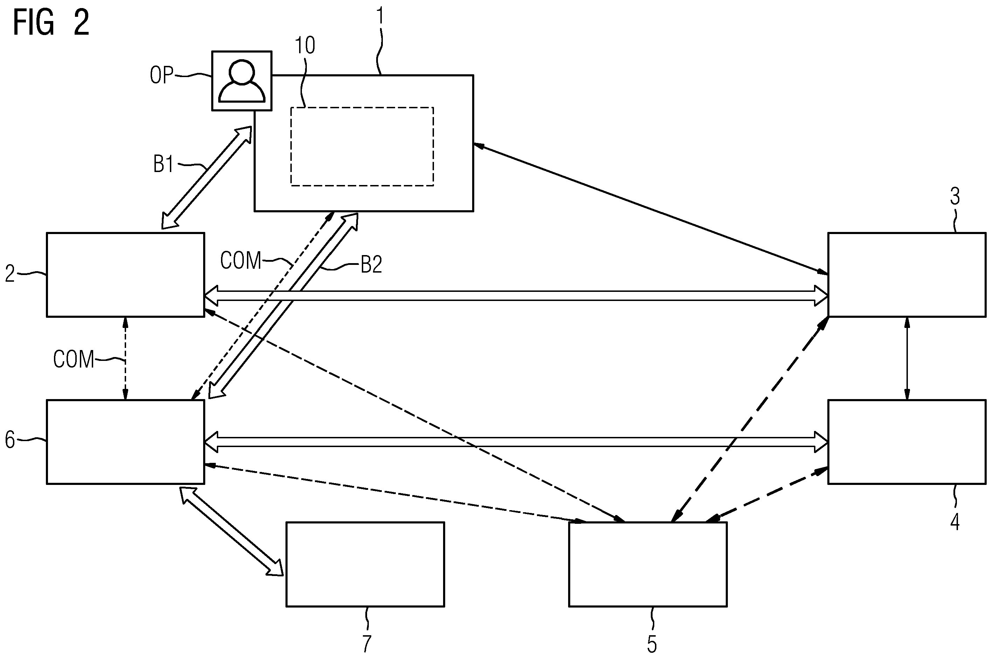

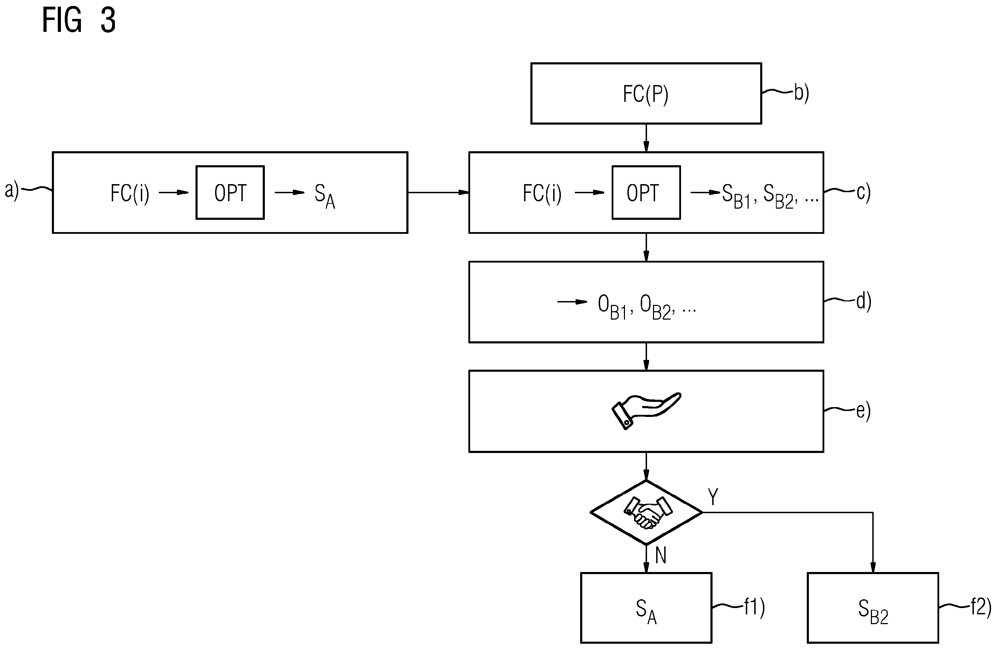

Im Unterschied hierzu zeigt Figur 2 eine ähnliche schematische Darstellung für die entsprechenden Zusammenhänge, wenn bei einem ähnlichen Energiesystem 1 ein Regelungsverfahren nach einem Ausführungsbeispiel der Erfindung zur Anwendung kommt. Im Wesentlichen sind die einzelnen Rollen und Verantwortlichkeiten analog zu den Zusammenhängen in Figur 1. Auch das Energiesystem 1 ist ähnlich aufgebaut und weist auch hier (nicht näher dargestellte) elektrische Betriebsmittel auf, insbesondere eine Mehrzahl von regelbaren Lasten L. Im Unterschied zum vorhergehenden Beispiel werden diese Lasten L hier aber von einem Regelungssystem 10 gemäß der vorliegenden Erfindung geregelt. Die dabei ablaufenden Schritte werden im Zusammenhang mit Figur 3 näher erläutert. Wesentlich ist, dass eine weitere Kommunikationsstelle COM vorliegt, über die das Regelungssystem 10 Prognosedaten vom Flexibility Trader 6 empfangen kann. Hierüber kann insbesondere eine Preisprognose zur Preisentwicklung auf dem kurzfristigen Energiemarkt 7 empfangen werden. Außerdem liegt für den Betreiber OP neben der Geschäftsbeziehung B1 zum Energieversorger 2 eine weitere Geschäftsbeziehung vor: Dies ist die Geschäftsbeziehung B2 zum Flexiblity Trader. Im Rahmen dieser weiteren Geschäftsbeziehung B2 können durch das Regelungssystem 10 automatisiert Verträge zwischen dem Betreiber OP und dem Flexibility Trader abgeschlossen werden. Diese Verträge beinhalten insbesondere eine vorzeitige Festlegung auf bestimmte zukünftige Lastprofile. Für eine solche vorzeitige Festlegung kann der Flexiblity Trader einen Preis an den Betreiber OP zahlen, wenn sie geeignet ist, zur Ausbalancierung der Leistungsflüsse in dem übergeordneten Stromnetz beizutragen.

Ein beispielhaftes Verfahren zur entsprechenden Regelung der Lasten L des Energiesystems 1 ist in Figur 3 beschrieben. Dabei muss der zeitliche Ablauf der einzelnen Verfahrensschritte a) bis f) nicht notwendigerweise in der alphabetischen Reihenfolge erfolgen. Zweckmäßig ist es jedoch, wenn die Schritte b) bis f) in der gezeigten Reihenfolge durchlaufen werden. Schritt a) erfolgt zweckmäßig vor Schritt f), also vor den beiden Optionen f1) oder f2). Er kann auch vor Schritt c) durchlaufen werden, wie es hier gezeigt ist. Dies ist jedoch nicht unbedingt nötig.

Allgemein und unabhängig von der genauen Abfolge wird in Schritt a) ein erstes optimiertes Betriebsszenario S_{A} für ein gegebenes Zeitfenster ermittelt, welches beim Zeitpunkt der Ermittlung in der Zukunft liegt. Ein solches Betriebsszenario ist (ggf. unter anderem) durch die zugeordneten zeitabhängigen Lastprofile für die regelbaren Lasten L des Betriebssystems 1 gekennzeichnet. Durch diese einzelnen Lastprofile, ggf. in Kombination mit entsprechenden Lastprofilen der optional vorliegenden Erzeuger- und Speichervorrichtungen, ist ein zeitlicher Verlauf eines Gesamtenergiebedarfs des Energiesystems festgelegt, welcher auch als Gesamtlastprofil bezeichnet wird. Die Ermittlung des ersten Betriebsszenarios S_{A} erfolgt anhand eines Optimierungsschrittes OPT. Zur Durchführung solcher Optimierungen sind im Stand der Technik zahlreiche Verfahren bekannt. Insbesondere kann hier ein regelbasierter Optimierungsalgorithmus zum Einsatz kommen, beispielsweise ein Regressionsverfahren. Alternativ ist aber auch der Einsatz eines Kl-Modells bei der Optimierung OPT möglich.

Bei der Optimierung werden die Lastprofile der Betriebsmittel variiert und im Hinblick auf eine Zielfunktion optimiert. Dabei können gegebenenfalls ein oder mehrere Randbedingungen berücksichtigt werden. So kann insbesondere die von dem Energiesystem 1 zu erfüllende Aufgabe über ein oder mehrere Randbedingungen in das Optimierungsverfahren OPT einfließen. Die Optimierung kann insbesondere durch Extremalisierung (Minimierung oder Maximierung) einer Zielfunktion erfolgen, welche die von dem Betreiber OP des Energiesystems 1 an den Energieversorger 2 zu zahlenden Netzentgelte als Kriterium enthält. Gegebenenfalls können in der Zielfunktion auch weitere Kriterien enthalten sein, wobei die Priorisierung der einzelnen Kriterien z.B. über zugeordnete Gewichtungsfaktoren festgelegt werden kann. Weitere relevante Kriterien können z.B. eine Energieeffizienz, eine Alterung der Betriebsmittel oder operationale Kriterien wie erwartete Zeitpunkte bzw. eine erwartete Zuverlässigkeit bei der Erfüllung der vorgegebenen Aufgabe(n) sein. Die zu erfüllende Aufgabe kann zum Zeitpunkt der Optimierung OPT noch mit einer Unsicherheit behaftet sein. So wird bei einer Fertigungsanlage z.B. noch nicht im Voraus immer genau festgelegt, welche Fertigungsschritte wann ausgeführt werden. Oder bei einem Bürogebäude steht nicht genau fest, wann welcher Raum genutzt wird und wann er entsprechend klimatisiert sein muss. Auch wetterabhängige Größen (die den Energiebedarf einer Gebäudetemperierung beeinflussen) und andere Parameter können die Aufgabe bzw. den Energiebedarf bei deren Umsetzung beeinflussen. Für all diese mit einer Unsicherheit behafteten Größen kann im Vorfeld der Optimierung OPT ein Vorhersageergebnis FC(i) berechnet bzw. abgeschätzt werden. Dieses Vorhersageergebnis FC(i) enthält Prognosedaten, die für den lokalen Betrieb des Energiesystems 1 relevant sind. Besonders vorteilhaft kann bei der Ermittlung dieser Prognosedaten FC(i) ein Kl-Modell zum Einsatz kommen, da bei der entsprechenden Prognose für ein gegebenes Energiesystem 1 stark von bisherigen Erfahrungswerten profitiert werden kann. Somit können die Vorteile des maschinellen Lernens bei einer solchen lokalen Prognose besonders wirksam zum Tragen kommen. Das insgesamt in Schritt a) abgeleitete erste Betriebsszenario S_{A} stellt für das erfindungsgemäße Verfahren ein Referenz-Betriebsszenario dar, welches in Bezug auf das Kriterium der Energiekosten durch Minimierung der an einen Energieversorger zu zahlenden Netzentgelte ermittelt wurde.

Im rechten Teil der Figur 3 ist dargestellt, wie beim erfindungsgemäßen Verfahren ein oder mehrere alternative Betriebsszenarien S_{B1},S_{B2}, usw. ermittelt werden, die sich bezüglich der zugeordneten Gesamtlastprofile von dem Referenz-Betriebsszenario S_{A} unterscheiden. Hierzu wird in Schritt b) zunächst eine Preisprognose FC(P) für einen Energiepreis bereitgestellt, wie er für das betrachtete zukünftige Zeitfenster auf einem kurzfristigen Energiemarkt 7 (z.B. dem europäischen Spotmarkt EPEX) erwartet wird. Diese Preisprognose wird z.B. von dem Flexibility Trader 6 der Figur 2 über die Kommunikationsschnittstelle COM dem Regelungssystem 10 zur Verfügung gestellt. Dabei wird diese Preisprognose FC(P) mit dem Näherrücken eines zukünftigen Zeitpunktes zunehmend genauer.

In Schritt c) wird wenigstens eine weitere Optimierung OPT durchgeführt, um wenigstens ein alternatives, zweites Betriebsszenario S_{B}, zu ermitteln. Besonders bevorzugt wird hier insgesamt eine Mehrzahl solcher zweiter Betriebsszenarien S_{B1}, S_{B2}, ... ermittelt. Das genutzte Optimierungsverfahren OPT kann im Wesentlichen analog ausgebildet sein wie beim oben beschriebenen Schritt a) und es können vorteilhaft auch dieselben lokalen Prognosedaten FC(i) als Grundlage der Optimierung OPT verwendet werden. Der wesentliche Unterschieb zwischen Schritt c) und Schritt a) ist, dass hier anstelle der Kriteriums der möglichst niedrigen Netzentgelte an den Energieversorger 2 ein kombiniertes monetäres Optimierungskriterium verwendet wird. Genauer gesagt wird derjenige Term Eₙ der Zielfunktion, der bei Schritt a) die Netzentgelte repräsentiert, durch einen zusammengesetzten monetären Zielterm Tₘ der folgenden Form ersetzt: ${T}_{m} = {E}_{n} - {E}_{f}$

Dabei steht Eₙ für die an den Energieversorger 2 zu zahlenden Netzentgelte, die bei Schritt a) insbesondere den alleinigen monetären Zielterm Tₘ ausbilden. E_{f} steht für den Ertrag, der voraussichtlich auf einem kurzfristigen Energiemarkt 7 (bzw. durch Handel mit einem Flexibility Trader 6, der auf diesem Energiemarkt 7 teilnimmt), erzielt werden kann. Der Wechsel von der alleinigen Berücksichtigung der Netzentgelte Eₙ zu diesem zusammengesetzten monetären Zielterm bewirkt, dass eine Erhöhung der zu zahlenden Netzentgelte Eₙ durch einen gegenüber dieser Differenz höheren Ertrag E_{f} überkompensiert werden kann. Dieser monetäre Anreiz kann den Betreiber OP des Energiesystems 1 zu einer Ausnutzung einer bei seinem Betrieb möglichen zeitlichen Flexibilität motivieren, die sich beim der Stabilisierung des übergeordneten Stromnetzes insgesamt vorteilhaft auswirkt.

In den Schritten a) bis c) werden also unterschiedliche, in dem Energiesystem 1 zukünftig umsetzbare Betriebsszenarien S_{A}, S_{B1}, S_{B2}, ... berechnet, mit denen die zu erfüllende Aufgabe erwartungsgemäß umgesetzt werden kann. Diesen einzelnen Betriebsszenarien sind jeweils entsprechende Lastprofile für die einzelnen Betriebsmittel zugeordnet. Insgesamt können aus den Betriebsszenarien zugeordnete Betriebsparameter abgeleitet werden, mit denen das Regelungssystem 10 des Energiesystems 1 die Betriebsmittel entsprechend regeln kann. Durch die weiteren Schritte d) und e) wird festgelegt, ob die Regelung entsprechend dem ersten Betriebsszenario S_{A} oder entsprechend einem der zweiten Betriebsszenarien S_{B1}, S_{B2}, ... erfolgt. Dazu wird in Schritt d) zunächst zu den jeweiligen zweiten Betriebsszenarien S_{B1}, S_{B2}, ... jeweils ein entsprechendes Angebot O_{B1}, O_{B2}, ... abgeleitet, welches gegenüber einem potenziellen Vertragspartner (insbesondere dem Flexibility Trader 6) platziert werden kann. Das jeweilige Angebot beinhaltet dabei den zeitlichen Verlauf des zugeordneten Gesamt-Lastprofils (Gesamtenergiebedarf) und einen Preis, welcher der potenzielle Vertragspartner für eine vorzeitige Festlegung auf dieses Gesamt-Lastprofil zahlen soll. Das Ableiten des zu zahlenden Preises erfolgt wiederum auf Grundlage der oben beschriebenen Preisprognose FC(P). Insbesondere entspricht der geforderte Preis zumindest dem Ertrag E_{f}, der als Bestandteil der Zielfunktion in der oben beschriebenen Optimierung OPT in Schritt c) berücksichtigt wurde.

Diese in Schritt d) abgeleiteten Angebote werden im nachfolgenden Schritt e) gegenüber dem potenziellen Vertragspartner platziert. Die Platzierung erfolgt vollständig automatisiert durch das Regelungssystem 10, z.B. über die oben beschriebene Kommunikationsschnittstelle COM. Nach der Platzierung des wenigstens einen Angebots ergeben sich zwei Möglichkeiten: Der potenzielle Vertragspartner kann das Angebot annehmen (Pfad Y der Fallunterscheidung), so dass ein verbindlicher Vertrag zustande kommt. Oder er kann es ablehnen, bzw. nicht darauf eingehen, so dass kein Vertrag zustande kommt (Pfad N der Fallunterscheidung). Beim erstgenannten Fall Y erfolgt auch die Annahme bevorzugt vollständig automatisiert, so dass es sich um einen Vertrag im elektronischen Geschäftsverkehr handelt. Dieser Vertrag kommt also computergestützt mittels zweier Maschinen zustande, entfaltet aber seine rechtliche Wirkung zwischen dem Betreiber OP des Energiesystems 1 und dem Flexibility Trader 6 als Person bzw. Unternehmer. Die in Figur 3 gezeigte Fallunterscheidung kann auch als zusätzlicher Teilschritt des Verfahrens angesehen werden: Es erfolgt also allgemein eine Prüfung, ob eines der platzierten Angebote O_{B1}, O_{B2}, ... von dem potenziellen Vertragspartner angenommen wurde.

Die Regelung der Lasten L des Energiesystems 1 gemäß Verfahrensschritt f) erfolgt nun unterschiedlich, je nachdem, ob ein solcher Vertrag geschlossen wird oder nicht. Ohne Vertragsschluss (Fall N) erfolgt die Regelung des Betriebssystems mit den Regelungsparametern, die dem in Schritt a) optimierten ersten Betriebsszenario S_{A} zugeordnet sind. Mit Vertragsschluss (Fall Y) erfolgt die Regelung des Betriebssystems mit den Regelungsparametern, die dem in Schritt b) optimierten zweiten Betriebsszenario S_{B2} zugeordnet sind, für das das zugeordnete Angebot O_{B2} vom Vertragspartner 6 angenommen wurde. Im Falle mehrerer solcher Angebote O_{B1}, O_{B2}, ... werden diese in Schritt e) sequenziell und/oder gleichzeitig immer so platziert, dass für ein gegebenes zukünftiges Zeitfenster jeweils nur ein Angebot angenommen werden kann.

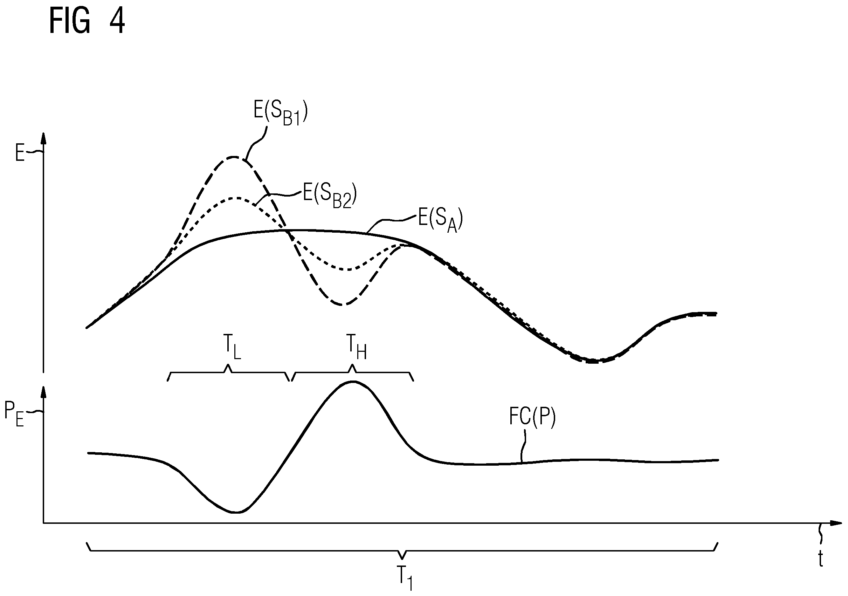

In Figur 4 ist beispielhaft dargestellt, wie sich die zeitabhängigen Gesamt-Lastprofile für verschiedene Betriebsszenarien unterscheiden können. Im oberen Teil der Graphik ist der Gesamtenergiebedarf E des Energiesystems 1 (pro fixem Zeitintervall) als Funktion der Zeit t aufgetragen. Bei äquidistanter zeitlicher Diskretisierung entspricht der Verlauf dieses Gesamtenergiebedarfs E einem Leistungsprofil (auch: Lastprofil).

Das Lastprofil zu dem in Schritt a) optimierten ersten Betriebsszenario S_{A} ist hier mit E(S_{A}) bezeichnet. Es handelt sich um ein geplantes Lastprofil für ein vorgegebenes zukünftiges Zeitfenster T₁. Durch die Optimierung im Hinblick auf möglichst niedrige Netzentgelte Eₙ ergibt sich bei diesem Beispiel ein relativ flacher Verlauf des Lastprofils E(S_{A}), bei dem vor allem hohe Leistungspeaks möglichst vermieden wurden, um die Netzentgelte gemäß der registrierenden Leistungsmessung gering zu halten.

Das Lastprofil zu dem in Schritt c) optimierten zweiten Betriebsszenario S_{B1} ist hier mit E(S_{B1}) bezeichnet. Analog ist das Lastprofil zu dem weiteren zweiten Betriebsszenario S_{B2} mit E(S_{B2}) bezeichnet. Das Betriebsszenario S_{B1} wurde insbesondere durch eine Optimierung aufgefunden, bei der im Vergleich zum Schritt a) der monetäre Zielterm Tₘ = Eₙ durch den monetären Zielterm Tₘ = Eₙ - E_{f} ersetzt wurde. Mit anderen Worten wurde hier die Differenz aus den an den Energieversorger 2 geschuldeten Netzentgelten Eₙ und dem durch einen Handel mit dem Flexibility Trader 6 erzielbaren Ertrag E_{f} als monetärer Zielterm berücksichtigt. Das zweite Betriebsszenario S_{B1} mit dem zugehörigen Lastprofil E(S_{B1}) entspricht also einem Betrieb des Energiesystems 1, der (ggf. unter Berücksichtigung weiterer Kriterien) im Hinblick auf die monetäre Gesamtbetrachtung beim Handel mit den relevanten Energiemengen optimiert wurde. Der Zielterm Tₘ = Eₙ - E_{f} weist dann unter Berücksichtigung der relevanten Randbedingungen zumindest ein lokales Optimum und ggf. auch ein globales Optimum auf. Der beim kurzfristigen Handel mit zeitgebundenen Energiemengen erzielbare Ertrag E_{f} wird dabei auf Grundlage einer Preisprognose FC(P) für die Preisentwicklung auf dem kurzfristigen Energiemarkt 7 berechnet. Ein Beispiel für eine solche Preisprognose FC(P) ist im unteren Teil der Figur 4 gezeigt, wobei der vorhergesagte Energiepreis P_{E} als Funktion der Zeit t für dasselbe zukünftige Zeitfenster T₁ aufgetragen ist. In der Prognose für dieses Zeitfenster T₁ ist zunächst eine Phase T_{L} mit vergleichsweise niedrigem kurzfristigen Energiepreis, z.B. aufgrund eines Überangebots aus erneuerbaren Energiequellen enthalten. Danach ist eine Phase T_{H} mit vergleichsweise hohem kurzfristigen Energiepreis, z.B. aufgrund einer höheren erwarteten Nachfrage enthalten. Auf Grundlage einer solchen Preisprognose wäre ein Flexibility Trader unter Umständen bereit, einen gewissen Preis für eine Vorab-Festlegung auf ein Lastprofil zu zahlen, bei dem der Gesamtenergiebedarf E während der Überschussphase T_{L} vergleichsweise hoch ist und während der Engpassphase T_{H} vergleichsweise niedrig ist. Entsprechend ist die Kurve E(S_{B1}) im Vergleich zur Kurve E(S_{A}) im Bereich von T_{L} lokal erhöht und im Bereich von T_{H} lokal erniedrigt. Für die Festlegung auf eine solche zur Stabilisierung des übergeordneten Stromnetzes günstige Lastkurve (als absolut definierten Lastgang) kann daher ein Ertrag E_{f} für die Bereitstellung der erwünschten Flexibilität erzielt werden, der in diesem Fall den Anstieg der an den Energieversorger zu zahlenden Netzentgelte Eₙ aufgrund des höheren Lastpeaks der Kurve E(S_{B1}) übersteigt. Aus diesem Grund ist, falls ein entsprechender Handel über die Festlegung auf die Kurve E(S_{B1}) zustande kommt, eine Regelung des Betriebssystems nach diesem zweiten Betriebsszenario S_{B1} für den Betreiber des Betriebssystems wirtschaftlich günstiger. Dies gilt für alle alternativen Betriebsszenarien S_{B1}, S_{B2},..., bei denen der erzielte Ertrag für die Festlegung die höheren Netzentgelte und ggf. weitere quantifizierbare Nachteile (also die Opportunitätskosten) übersteigt. Für den Betrieb des übergeordneten Stromnetzes sind diese alternativen Betriebsszenarien S_{B1}, S_{B2},... auch in technischer Hinsicht günstiger, da so ein Beitrag zur Stabilität des Stromnetzes und zur Balancierung der Lasten geleistet werden kann.

Wie beschrieben, handelt es sich bei dem Betriebsszenario S_{B1} um ein Optimum im Hinblick auf die Tₘ = Eₙ - E_{f} und ggf. weitere berücksichtigte Kriterien. Die Festlegung auf dieses Optimum kann dem Flexibility Trader zu einem gewissen Preis angeboten werden, welcher aus der Preisprognose FC(P) abgeleitet wird und bei der Optimierung berücksichtigt wird. Dabei handelt es sich gewissermaßen um den Preis für die Verschiebung einer bestimmten Energiemenge aus der Engpassphase T_{H} in die Überschussphase T_{L}. Es sind jedoch Konstellationen denkbar, in denen es wirtschaftlicher ist, nicht die gesamte, ohne übermäßige Einbußen verschiebbare Energiemenge zu verschieben, sondern nur einen vorgegebenen Anteil davon, z.B. die Hälfte. Eine solche Begrenzung kann z.B. als zusätzliche Randbedingung bei der Optimierung berücksichtigt werden. So entspricht die Kurve E(S_{B2}) zu dem weiteren zweiten Betriebsszenario S_{B2} einem Fall, bei dem die genutzte Flexibilität auf die Hälfte der insgesamt wirtschaftlich realisierbaren Flexibilität begrenzt wurde. Dieses Betriebsszenario S_{B2} kann dem Flexibility Trader nicht nur zu einem niedrigeren absoluten Preis, sondern typischerweise auch zu einem niedrigeren spezifischen Preis angeboten werden, also einem niedrigeren "Preis pro vorteilhaft verschobener Energiemenge". Wenn in den Schritten c), d) und e) mehrere solche Betriebsszenarien gerechnet und für eine entsprechende Vorab-Festlegung angeboten werden, dann kann der Flexibility Trader ggf. unter Berücksichtigung einer inzwischen aktualisierten Preisprognose FC(P) darüber entscheiden, welches der Angebote er gegebenenfalls annehmen möchte. Die Anzahl der berücksichtigten alternativen Betriebsszenarien kann unterschiedlich gewählt sein und insbesondere größer als drei, vorteilhaft größer als fünf sein und beispielsweise bei zehn liegen. Die Anzahl kann durch eine Benutzereingabe vorgegeben sein oder auch von dem verwendeten Algorithmus (z.B. einem KI-System) automatisiert festgelegt werden. So kann es z.B. vorteilhaft sein, bei Zeitfenstern mit einem vergleichsweise hohen preislichen Hub zwischen Überschuss- und Engpassphasen mehr Szenarien zu berechnen als bei Zeitfenstern mit vergleichsweise flachen Preisprognosen FC(P). Auch wenn die Preisprognose mit einer vergleichsweise großen Unsicherheit behaftet ist, kann es zweckmäßig sein, vergleichsweise mehr Betriebsszenarien zu berechnen und anzubieten. Allgemein ist es daher vorteilhaft, wenn die Anzahl der optimierten Betriebsszenarien und der daraus abgeleiteten Angebote kontinuierlich und automatisiert in Abhängigkeit der jeweils empfangenen Preisprognose FC(P) angepasst wird.

Es wird hier allgemein von einer "Verschiebung von aufgenommenen Energiemengen" von ungünstige in günstige Zeiträume gesprochen, auch wenn streng genommen das Energieintegral über die betrachteten Lastkurven nicht immer genau konstant ist. In erster Näherung werden hier zwar zeitliche Flexibilitäten realisiert, in dem Sinne, dass die aufgenommenen Energiemengen ohne wesentliche Effizienzeinbußen in andere Zeitintervalle verschoben werden können. Es ist allerdings bei genauerer Betrachtung möglich, dass die Energieeffizienz bei der Nutzung einer solchen Flexibilität insgesamt sinkt und das die Ausnutzung der Flexibilität trotzdem insgesamt wirtschaftlich und technisch vorteilhaft ist. So können z.B. Effizienzeinbußen von bis zu 10% oder sogar bis zu 20% in Kauf genommen werden, wenn bei einer entsprechenden Lastverschiebung die Vorteile im Hinblick auf die Stabilisierung des Stromnetzes überwiegen.

Insgesamt kann die Gesamtheit der genannten Verfahrensschritte a) bis f) iterativ wiederholt werden, da die tatsächliche Zeit t ständig voranschreitet und somit immer neue Prognosen und Festlegungen für weitere zukünftige Zeitfenster relevant werden. Zur Realisierung der Vorteile der Erfindung reicht es aus, wenn zumindest einmal in diesem iterativen Prozess ein Handel über die Ausnutzung einer zeitlichen Flexibilität im Sinne eines zweiten Betriebsszenarios zustande kommt, und die Regelung des Betriebssystems in Schritt f) zumindest einmal gemäß der entsprechenden Variante f2) erfolgt. Wenn es zu einer solchen vertraglichen Festlegung kommt, ist es möglich, dass das Betriebssystem entgegen der Vorausberechnung nicht so geregelt werden kann, dass die versprochene Lastkurve umgesetzt wird. Für diesen Fall kann eine Ausgleichszahlung an den Flexibility Trader 6 vereinbart werden. Das damit verbundene finanzielle Risiko kann bei der Optimierung in Schritt c) unter Berücksichtigung der Höhe und der Wahrscheinlichkeit einer solchen Zahlung als Abschlag in den erwarteten Ertrag E_{f} eingerechnet werden.

Allgemein ist es auch möglich, dass die Festlegung auf eine bestimmte Lastkurve, z.B. E(S_{B1}), für einen kürzeren Zeitraum erfolgt als die Optimierung des Referenz-Betriebszustands S_{A} in Schritt a). Wesentlich ist hier nur, dass für irgendeinen Teilbereich, also irgendein gemeinsames zukünftiges Zeitfenster, eine Optimierung von mehreren alternativen Betriebsszenarien und eine entsprechende Auswahl der Regelungsparameter erfolgt, abhängig vom Zustandekommen eines Vertrags über die angebotene Festlegung. Unter Umständen kann ein bereits geschlossener Vertrag über eine solche Festlegung auch rückabgewickelt werden und durch eine Festlegung auf ein anderes, insbesondere ein noch günstigeres Betriebsszenario ersetzt werden. Dies kann insbesondere dann vorteilhaft sein, wenn nach einer ersten Festlegung eine unerwartete Änderung in der Preisprognose eintritt, die dann rechtzeitig vor Umsetzen der Regelungsparameter noch eine Nachoptimierung sowie eine entsprechende (beiderseitige) Anpassung des Vertrags auslösen kann.

Die Anmelderin weist an dieser Stelle darauf hin, dass unabhängig vom grammatikalischen Geschlecht eines bestimmten personenbezogenen Begriffs stets Personen mit männlicher, weiblicher und anderer Geschlechteridentität mit umfasst sein sollen.

### Bezugszeichenliste

- 1: Energiesystem
- 2: Energieversorger
- 3: Verteilnetzbetreiber
- 4: Übertragungsnetzbetreiber
- 5: Anbieter für Regelleistung (Balance Service Provider)
- 6: Handelspartner (Flexibility Trader)
- 7: kurzfristiger Energiemarkt
- 10: Regelungssystem
- a)-f): Verfahrensschritte
- B: Geschäftsbeziehung (Vertrag und Geldfluss)
- COM: Kommunikationsschnittstelle
- D: Daten zur Balancierung
- E: Gesamtenergiebedarf
- E(S_{A}): Gesamtenergiebedarf für Betriebsszenario S_{A}
- E(S_{B1}): Gesamtenergiebedarf für Betriebsszenario S_{B1}
- E(S_{B2}): Gesamtenergiebedarf für Betriebsszenario S_{B2}
- FC(P): Preisprognose für kurzfristigen Energiepreis
- FC(i): weitere Prognosedaten
- L: regelbare Lasten
- O_{B1}, O_{B2},...: Angebote entsprechend den zweiten optimierten Betriebsszenarien
- OP: Betreiber des Energiesystems
- OPT: Optimierung
- P: Leistungsflüsse
- P_{E}: Energiepreis
- RL: Regelleistung
- S_{A}: erstes optimiertes Betriebsszenario
- S_{B1},S_{B2},...: zweite optimierte Betriebsszenarien
- t: Zeit
- T₁: zukünftiges Zeitfenster
- T_{H}: Phase mit hohem Energiepreis (Engpassphase)
- T_{L}: Phase mit niedrigem Energiepreis (Überschussphase)

## Patentansprüche

1. Computergestütztes Verfahren zum Regeln einer Anzahl von regelbaren Lasten (L) in einem Energiesystem (1), welches innerhalb eines Energieverteilnetzes mit Energie versorgt wird, wobei das Verfahren die folgenden Schritte umfasst:
a) Ermitteln eines optimierten ersten Betriebsszenarios (S_{A}) für ein zukünftiges Zeitfenster (T₁),
- wobei das Betriebsszenario (S_{A}) zugeordnete Lastprofile für die regelbaren Lasten (L) des Energiesystems (1) enthält, wodurch ein zeitlicher Verlauf eines Gesamtenergiebedarfs (E(S_{A})) des Energiesystems (1) festgelegt ist,
- wobei anhand eines computerimplementierten Modells des Energiesystems (1) eine Optimierung der Lastprofile im Hinblick auf von einem Betreiber (OP) des Energiesystems (1) zu zahlende Netzentgelte (Eₙ) erfolgt, unter der Randbedingung, dass eine vordefinierte Aufgabe mittels der Lasten (L) des Energiesystems (1) umgesetzt wird,
b) Empfangen einer Preisprognose (FC(P)) für den zeitlichen Verlauf eines Energiepreises (P_{E}), mit dem eine vordefinierte Energiemenge in dem zukünftigen Zeitfenster (T₁) auf einem kurzfristigen Energiemarkt (7) gehandelt wird,
c) Erstellen wenigstens eines optimierten zweiten Betriebsszenarios (S_{B1},S_{B2}) für das zukünftige Zeitfenster (T₁),
- wobei anhand eines computerimplementierten Modells des Energiesystems eine Optimierung der zugeordneten Lastprofile im Hinblick auf eine übergeordnete Zielfunktion erfolgt, welche zumindest die zu zahlenden Energiekosten (Eₙ) berücksichtigt sowie einen auf dem kurzfristigen Energiemarkt (7) erzielbaren Ertrag (E_{f}) für die Festlegung auf den zeitlichen Verlauf des zugeordneten Gesamtenergiebedarfs (E(S_{B1}),E(S_{B2})),
- wobei der erzielbare Ertrag (E_{f}) auf Grundlage der Preisprognose (FC(P)) ermittelt wird,
d) Ableiten wenigstens eines Angebots (O_{B1},O_{B2}) für eine verbindliche Festlegung auf den zeitlichen Verlauf des Gesamtenergiebedarfs entsprechend dem wenigstens einen zweiten Betriebsszenario,
e) Platzieren des wenigstens einen abgeleiteten Angebots (O_{B1},O_{B2}) gegenüber einem potenziellen Vertragspartner (6), insbesondere einem Handelspartner des kurzfristigen Energiemarkts (7), und
f) Umsetzen eines der optimierten Betriebsszenarien (S_{A}, S_{B1}) durch Regeln der Lasten (L) entsprechend den zugeordneten Lastprofilen,
- wobei ohne Annahme eines der platzierten Angebote die Umsetzung des ersten Betriebsszenarios (S_{A}) erfolgt und
- wobei bei Annahme eines der platzierten Angebote (O_{B1}) die Umsetzung des zugeordneten zweiten Betriebsszenarios (S_{B1}) erfolgt.

2. Verfahren nach Anspruch 1, bei welchem das Energieverteilnetz ein elektrisches Energieverteilnetz ist.

3. Verfahren nach Anspruch 1 oder 2, bei welchem das Energiesystem (1) wenigstens einen Energieerzeuger und/oder wenigstens einen Energiespeicher aufweist.

4. Verfahren nach einem der vorhergehenden Ansprüche, wobei bei der Optimierung der Lastprofile in Schritt a) und/oder Schritt c) wenigstens eine physikalische Größe als Optimierungskriterium berücksichtigt wird und/oder für die Aufstellung einer einzuhaltenden Randbedingung verwendet wird, insbesondere wenigstens eine der folgenden physikalischen Größen:
- eine energetische Effizienz beim Betrieb des Energiesystems (1),
- eine Anzahl von umzusetzenden Schaltvorgängen in Geräten des Energiesystems (1),
- eine Alterung von Geräten des Energiesystems (1) durch den Betrieb.

5. Verfahren nach einem der vorhergehenden Ansprüche, wobei bei der Optimierung der Lastprofile in Schritt a) und/oder Schritt c) wenigstens eine operationale Größe als Optimierungskriterium berücksichtigt wird und/oder für die Aufstellung einer einzuhaltenden Randbedingung verwendet wird, insbesondere wenigstens eine der folgenden operationalen Größen:
- ein Zeitpunkt oder Zeitfenster für das Umsetzen der vordefinierten Aufgabe oder einer vorgegebenen Teilaufgabe davon,
- eine prognostizierte Wahrscheinlichkeit für das erfolgreiche Umsetzen der vordefinierten Aufgabe oder einer vorgegebenen Teilaufgabe davon.

6. Verfahren nach einem der vorhergehenden Ansprüche,
- wobei in Schritt c) mehrere optimierte zweite Betriebsszenarien (S_{B1},S_{B2},...) erstellt werden,
- wobei in den Schritten d) und e) mehrere, diesen zweiten Betriebsszenarien (S_{B1},S_{B2},...) zugeordnete Angebote (O_{B1},O_{B2},...) abgeleitet und platziert werden,
- wobei die Mehrzahl von Angeboten (O_{B1},O_{B2},...) insbesondere so platziert wird, dass nur eines von ihnen durch den potenziellen Vertragspartner (6) angenommen werden kann.

7. Verfahren nach Anspruch 6, bei welchem wenigstens eine Teilmenge der Angebote (O_{B1},O_{B2},...) gleichzeitig platziert wird, wobei nur eines dieser Angebote (O_{B1} ,O_{B2},...) angenommen werden kann.

8. Verfahren nach Anspruch 6 oder 7, bei welchem wenigstens eine Teilmenge der Angebote (O_{B1},O_{B2},...) sequenziell platziert wird, wobei insbesondere für die früher platzierten Angebote (O_{B1},O_{B2},...) eine vergleichsweise bessere Optimierung im Hinblick auf die übergeordnete Zielfunktion erreicht wurde.

9. Verfahren nach einem der vorhergehenden Ansprüche, bei welchem im Falle der Annahme eines Angebots (O_{B1}) durch einen Vertragspartner (6) und der Umsetzung eines zweiten Betriebsszenarios (S_{B1}) in Schritt f) geprüft wird, ob die verbindliche Festlegung erreicht wurde, wobei im Falle eines Nichterreichens eine Ausgleichszahlung an den Vertragspartner (6) erfolgt, wobei insbesondere die Höhe und eine prognostizierte Wahrscheinlichkeit für das Eintreten einer solchen Ausgleichszahlung in der übergeordneten Zielfunktion berücksichtigt wird.

10. Verfahren nach einem der vorhergehenden Ansprüche, bei welchem beim Erstellen des wenigstens eines optimierten zweiten Betriebsszenarios (S_{B1},S_{B2},...) ein Datensatz mit weiteren Prognosedaten (FC(i)) verwendet wird, insbesondere mit Prognosedaten, welche ein oder mehrere der folgenden Größen enthalten und/oder beeinflussen:
- Wetterparameter, insbesondere eine Umgebungstemperatur, eine Sonneneinstrahlung und/oder eine Windgeschwindigkeit im Bereich des betrachteten Energiesystems (1),
- Auslastungsparameter für ein Gebäude, in dem das Energiesystem (1) angeordnet ist, insbesondere ein Bürogebäude, ein Wohngebäude oder ein Fabrikgebäude,
- Auslastungsparameter für eine Fertigungsanlage, in dem das Energiesystem (1) angeordnet ist,
- Auslastungsparameter für eine Flotte von Fahrzeugen, die durch das Energiesystem (1) mit Energie versorgt werden.

11. Verfahren nach einem der vorhergehenden Ansprüche, bei welchem zumindest beim Erstellen des wenigstens eines optimierten zweiten Betriebsszenarios (S_{B1},S_{B2},...) ein Modell der künstlichen Intelligenz, insbesondere ein künstliches neuronales Netzwerk zum Einsatz kommt.

12. Verfahren nach Anspruch 11, bei welchem das Modell der künstlichen Intelligenz mit einem Verfahren des maschinellen Lernens vortrainiert wurde, insbesondere mit Trainingsdaten, welche spezifisch für die Ausgestaltung des Energiesystems (1) mit konkreten regelbaren Lasten sowie optionalen zusätzlichen Erzeugern und/oder Speichern sind.

13. Verfahren nach Anspruch 11 der 12, bei welchem das Modell der künstlichen Intelligenz im laufenden Betrieb des Energiesystems (1) weiter trainiert wird, insbesondere durch Bewertung des in Schritt f) umgesetzten Betriebsszenarios (S_{A}, S_{B1}) im Hinblick auf monetäre, physikalische und/oder operationale Kriterien.

14. System zum Regeln einer Anzahl von regelbaren Lasten (L) in einem Energiesystem (1), welches innerhalb eines Energieverteilnetzes mit Energie versorgt wird, aufweisend:
- eine Optimierungseinrichtung, die zum Ermitteln eines optimierten ersten Betriebsszenarios (S_{A}) für ein zukünftiges Zeitfenster (T₁) ausgelegt ist,
- wobei das Betriebsszenario (S_{A}) zugeordnete Lastprofile für die regelbaren Lasten (L) des Energiesystems (1) enthält, wodurch ein zeitlicher Verlauf eines Gesamtenergiebedarfs (E(S_{A})) des Energiesystems (1) festgelegt ist,
- wobei anhand eines computerimplementierten Modells des Energiesystems (1) eine Optimierung (OPT) der Lastprofile im Hinblick auf von einem Betreiber (OP) des Energiesystems (1) zu zahlende Netzentgelte (Eₙ) erfolgt, unter der Randbedingung, dass eine vordefinierte Aufgabe mittels der Lasten (L) des Energiesystems (1) umgesetzt wird,
- eine Empfangseinrichtung (COM) zum Empfangen einer Preisprognose (FC(P)) für den zeitlichen Verlauf eines Energiepreises (P_{E}), mit dem eine vordefinierte Energiemenge in dem zukünftigen Zeitfenster (T₁) auf einem kurzfristigen Energiemarkt (7) gehandelt wird,
- eine Optimierungseinrichtung, die zum Erstellen wenigstens eines optimierten zweiten Betriebsszenarios (S_{B1},S_{B2}) für das zukünftige Zeitfenster (T₁) ausgelegt ist,
- wobei anhand eines computerimplementierten Modells des Energiesystems eine Optimierung der zugeordneten Lastprofile im Hinblick auf eine übergeordnete Zielfunktion erfolgt, welche zumindest die zu zahlenden Energiekosten (Eₙ) berücksichtigt sowie einen auf dem kurzfristigen Energiemarkt (7) erzielbaren Ertrag (E_{f}) für die Festlegung auf den zeitlichen Verlauf des zugeordneten Gesamtenergiebedarfs (E(S_{B1}), E(S_{B2})),
- wobei der erzielbare Ertrag (E_{f}) auf Grundlage der Preisprognose (FC(P)) ermittelt wird,
- eine Berechnungseinrichtung zum Ableiten wenigstens eines Angebots (O_{B1},O_{B2}) für eine verbindliche Festlegung auf den zeitlichen Verlauf des Gesamtenergiebedarfs (E(S_{B1}), E(S_{B2})) entsprechend dem wenigstens einen zweiten Betriebsszenario (S_{B1},S_{B2}),
- eine Angebotseinrichtung (COM) zum Platzieren des wenigstens einen abgeleiteten Angebots (O_{B1},O_{B2}) gegenüber einem potenziellen Vertragspartner (6), insbesondere einem Handelspartner des kurzfristigen Energiemarkts (7), und
- eine Regelungseinrichtung (10) zum Umsetzen eines der optimierten Betriebsszenarien (S_{A}, S_{B1}) durch Regeln der Lasten (L) entsprechend den zugeordneten Lastprofilen,
- wobei ohne Annahme eines der platzierten Angebote die Umsetzung des ersten Betriebsszenarios (S_{A}) erfolgt und
- wobei bei Annahme eines der platzierten Angebote die Umsetzung des zugeordneten zweiten Betriebsszenarios (S_{B1}) erfolgt.

15. Computerprogrammprodukt umfassend Befehle, wobei die Befehle bei der Ausführung des Computerprogrammprodukts auf einem Computer diesen dazu veranlassen, das Verfahren gemäß einem der Ansprüche 1 bis 13 auszuführen.
